# EUROPEAN PATENT SPECIFICATION

(11) **EP 3 552 862 B1**
(45) Date of publication and mention of the grant of the patent: **31.03.2021**
(21) Application number: 18305428.7
(22) Date of filing: 10.04.2018
(51) Int. Cl.: B60L 53/14, B60L 53/30, B60L 53/35, B60L 53/36

(54) **CHARGER PLUG FOR SUPPLYING ELECTRIC ENERGY TO AN ELECTRIC VEHICLE, CHARGING STATION COMPRISING SAID CHARGER PLUG, CHARGING RECEIVER FOR AN ELECTRIC VEHICLE AND METHOD FOR CONNECTING SAID CHARGING RECEIVER AND SAID CHARGER PLUG**
LADESTECKER ZUR VERSORGUNG EINES ELEKTROFAHRZEUGS MIT ELEKTRISCHER ENERGIE, LADESTATION MIT DEM LADESTECKER, LADEEMPFÄNGER FÜR EIN ELEKTROFAHRZEUG UND VERFAHREN ZUM VERBINDEN DES LADEEMPFÄNGERS UND DES LADESTECKERS
PRISE DE CHARGEUR POUR FOURNIR DE L'ÉNERGIE ÉLECTRIQUE À UN VÉHICULE ÉLECTRIQUE, STATION DE CHARGE COMPRENANT LADITE PRISE DE CHARGEUR, RÉCEPTEUR DE CHARGE POUR VÉHICULE ÉLECTRIQUE ET PROCÉDÉ POUR CONNECTER LEDIT RÉCEPTEUR DE CHARGE ET LADITE PRISE DE CHARGEUR

(43) Date of publication of application: 16.10.2019
(73) Proprietor: HAGER-ELECTRO SAS, 67210 Obernai (FR); Hager Electro GmbH & Co. KG, 66440 Blieskastel (DE)
(72) Inventor: Haenel, Frédéric, 67290 Lohr (FR); Kauffmann, Bruno, 67120 Dachstein (FR); Kraemer, Jacques, 67000 Strasbourg (FR); Meyer, Loïc, 67114 Eschau (FR); Reiner, Ulrich, 67691 Hochspeyer (DE); Schmitt, Erwin, 67659 Kaiserslautern (DE); Simon, Michel, 68600 Dessenheim (FR)
(74) Representative: Cabinet Nuss

(56) References cited:
- DE-A1-102009 001 080
- DE-A1-102012 007 713
- DE-A1-102015 111 099
- FR-A1- 2 968 245
- US-A1- 2016 130 851

## Description

The invention relates to the field of electric vehicles. The invention relates to a charger plug for supplying electric energy to an electric vehicle, a charging station comprising said charger plug, a charging receiver for an electric vehicle suitable for being mounted on the bottom of the electric vehicle and arranged to be coupled with the charger plug and a method for connecting said charging receiver and said charger plug.

It is known from document US 2017/0096073 A1 to couple a charger plug of an underground charging station and a charging receiver of an electric vehicle located on the bottom of the electric vehicle by way of guiding system. In some implementations, a laser guiding system or a camera can be used. In other implementations, infrared illumination, mechanical locators such as tapered pins, ultraviolet illumination, radar scanning or optical guidance can be used. Charger plug and charging receiver, as well as guiding system are vulnerable to extreme temperatures, rain, snow, ice, external corrosion and dust, particularly when located respectively on the bottom of the electric vehicle and on the ground. For this reason, they may suffer from deterioration due to the outdoor conditions.

The document DE 10 2015 111099 relates to a vehicle charging system comprising a charge receptacle mounted assembly to a vehicle and disposed within the front fascia of said vehicle or other locations enabling engagement of an off-vehicle charge delivery device with said charge receptacle assembly, an alignment pin mounted to the vehicle and a ground station comprising a guide having a location region configured to receive the alignment pin and an electrical connector configured to engage the charge receptacle. The off-vehicle charge delivery device is an electrical connector disposed within a weather-shielding housing and on the guide. The mounted charge receptacle assembly includes a charge receptacle disposed within a receptacle housing provided with a movable door consisting of a normally-closed hinged front door allowing a protection against the elements. The door may be pushed open by the weather-shielding housing as the receptacle housing approaches the latter when the vehicle approaches the ground station.

The document DE 10 2009 001080 relates to a charging device for establishing a current contact with a land based motor vehicle. The charging device comprises a contact arm attached to a main body so as to be rotatable about an axis of rotation from a horizontal position into an inclined position and arranged centrally under the plug in vehicle located at a point below the vehicle. The contact arm comprises an electrical contact at the upper face of its free end intended to be connected with a contact of a power storage device of the vehicle.

The document DE 10 2012 007713 A1 relates to a charging station connector with a guiding mechanism which aligns both connectors, the charging station connector and the vehicle connector during the alignment process. The charging station connector surrounds the vehicle connector in the connected state. This solution does 't protect the connector of the charging station from protruding obstacles on the vehicle underbody.

This invention has as its object to remedy to these drawbacks by proposing a charger plug and a charging receiver configured to be easily connected and protected from the outdoor conditions and by proposing a method for connecting said charging receiver and said charger plug, which is easy to implement while protecting said charging receiver and said charger plug from the outdoor conditions.
For this purpose, the present invention relates to a charger plug for supplying electric energy to an electric vehicle, the charger plug comprising at least a first electric connector comprising at least one first electric contact, , the first electric connector being arranged to be coupled with a corresponding second electric connector of a charging receiver located on the bottom of the electric vehicle so that the at least one first electric contact being electrically connected with at least one second electric contact of the second electric connector,
a support comprising guiding means comprising a reception area arranged to surround at least partially the charging receiver and arranged to align the first electric connector and the second electric connector, when moving the charger plug in the direction of the charging receiver or conversely
charger plug characterized in that the support comprising a bottom face on which the first electric connector is mounted and an upper face arranged to slide on the bottom of the electric vehicle.

The present invention also relates to a charging station comprising at least one arm connected to charger plug by connection means, and comprising at least one actuator to move the at least one arm characterized in that the charging station comprises a charger plug according to the invention.

The present invention also relates to a charging receiver for an electric vehicle suitable for being mounted on the bottom of the electric vehicle and arranged to be coupled with the charger plug according to the invention, the charging receiver comprising at least one second electric connector arranged to be coupled with the first electric connector of the charger plug, the second electric connector comprising at least one second electric contact arranged to be electrically coupled with at least one first electric contact of the first electric connector of the charger plug, the charging receiver comprising a rotatable protection lid movable in rotation from a first position where the protection lid covers the second electric connector to protect the second electric contact and a second position where the protection lid uncovers the second electric connector to enable the electric connection between the second electric contact and the first electric contact,
charging receiver characterized in that the protection lid comprises means for opening the protection lid arranged so that the protection lid tilts from the first position to the second position when it cooperates with corresponding means for opening the protection lid of the charger plug.

The present invention also relates to a method for connecting a charging receiver of an electric vehicle and a charger plug of a charging station, the charging station being located on the ground and being suitable to be located underneath the bottom of the electric vehicle, the charging station comprising the charger plug which comprises a first electric connector, at least one arm connected to the charger plug by connection means and at least an actuator to move the at least one arm, the charging receiver being mounted on the bottom of the electric vehicle and comprising a second electric connector, the charger plug comprising guiding means comprising a reception area arranged to surround at least partially the charging receiver and arranged to align the first electric connector and the second electric connector, when moving the charger plug in the direction of the charging receiver or conversely, method comprising the steps of:
when the charger plug leans against the bottom of the electric vehicle in a sliding position:
   A) moving the electric vehicle in translation along a parallel direction relatively to the charger plug, to move the charging receiver in the direction of the charger plug so that the charger plug slides on the bottom of the electric vehicle, or
   B) moving the arm by means of the actuator in translation along the bottom of the electric vehicle to move the charger plug in the direction of the charging receiver so that the charger plug slides on the bottom of the electric vehicle,
when moving the electric vehicle or the arm according to the step A or B:
   C) aligning the first electric connector with the second electric connector by means of the guiding means of the charger plug, then
   D) tilting the protection lid movable in rotation from a first position where the protection lid covers the second electric connector to protect the second electric contact to a second position where the protection lid uncovers the second electric connector by means of corresponding means for opening the protection lid of the charging receiver and of the charger plug, then
   E) mechanically and electrically connecting the first electric connector 4 and the second electric connector 7.

The invention will be better understood using the description below, which relates to several preferred embodiments, given by way of non-limiting examples and explained with reference to the accompanying drawings, in which :
- figure 1A shows a charging station comprising a charger plug and an electric vehicle comprising a charging receiver mounted on the bottom of the electric vehicle, the charger plug being located inside a first protection housing in a protection position,
- figure 1B is a top view of the charging station and of the electric vehicle of figure 1A,
- figure 2 shows the charging station located underneath the electric vehicle, the charger plug being located inside a first protection housing in a protection position,
- figure 3A shows the charging station located underneath the electric vehicle, the charger plug being located outside the first protection housing,
- figure 3B is a bottom view of the charging station and of the electric vehicle of figure 3A,
- figure 4A shows a first embodiment of the charging station located underneath the electric vehicle, where the charger plug leans against the bottom of the electric vehicle in a sliding position,
- figure 4B is a bottom view of the charging station and of the electric vehicle of figure 4A,
- figure 4C is an enlarged view of the charging station and of the charger plug of figure 4A,
- figure 5A shows a second embodiment of the charging station located underneath the electric vehicle, where the charger plug leans against the bottom of the electric vehicle in a sliding position,
- figure 5B is an enlarged view of the charging station and of the charger plug of figure 5A,
- figure 6A shows the first embodiment of the charging station located underneath the electric vehicle, when moving an arm of the charging station in translation along the bottom of the electric vehicle, and showing a protection lid of the charger plug tilts in a second position P2,
- figure 6B is a bottom view of the charging station and of the electric vehicle of figure 6A,
- figure 6C is an enlarged view of the charging station and of the charger plug of figure 6A,
- figure 7A shows the first embodiment of the charging station located underneath the electric vehicle, when moving the electric vehicle in rear motion to move the charging receiver in the direction of the charger plug, and showing the protection lid of the charger plug tilts in the second position P2,
- figure 7B is an enlarged view of the charging station and of the charger plug of figure 7A,
- figure 8 shows the first embodiment of the charging station located underneath the electric vehicle, when moving the electric vehicle in forward motion to move the charging receiver in the direction of the charger plug or when moving an arm of the charging station in translation along the bottom of the electric vehicle, and showing the protection lid of the charger plug tilts in the second position P2,
- figure 9A shows the second embodiment of the charging station located underneath the electric vehicle, when moving the electric vehicle in rear motion to move the charging receiver in the direction of the charger plug, and showing the protection lid of the charger plug tilts in the second position P2,
- figure 9B is an enlarged view of the charging station and of the charger plug of figure 9A,
- figures 10 and 11 show a first embodiment of the charger plug and of the charging receiver,
- figure 12 shows the first embodiment of the charging receiver,
- figure 13 shows the first embodiment of the charger plug,

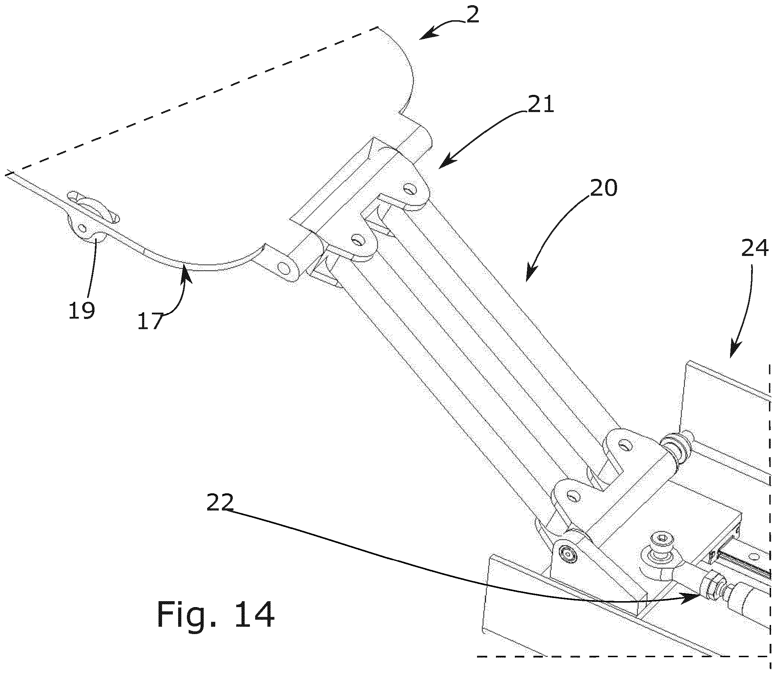

- figure 14 shows an enlarged view of the arm of the first embodiment of the charging station,
- figures 15 and 16 show a second embodiment of the charger plug and of the charging receiver,
- figure 17 shows the second embodiment of the charging receiver, and
- figure 18 shows the second embodiment of the charger plug,
- figure 19 shows a front view of a charging receiver according to an example useful for understanding the invention,
- figure 20 shows a side view of a charging receiver and of a charger plug according to an example useful for understanding the invention,
- figure 21 shows an electric vehicle comprising a plurality of charging receivers according to an example useful for understanding the invention,
- figures 22A and 22B show the charging receiver and the charger plug according to a first possibility of an example useful for understanding the invention,
- figures 23A and 23B show the charging receiver and the charger plug according to a second possibility of an example useful for understanding the invention,
- figure 24 to 31 show the charging receiver and the charger plug according to an example useful for understanding the invention,
- figure 32 shows a bottom view of the electric vehicle comprising the charging receiver according to an example useful for understanding the invention,
- figure 33 shows a perspective view of the charger plug according to an example useful for understanding the invention,
- figure 34 shows an electric vehicle comprising a plurality of charging receivers located on the sides, the rear or the front of the electric vehicle,
- figure 35 to 38 shows a charging spot according to an example useful for understanding the invention.

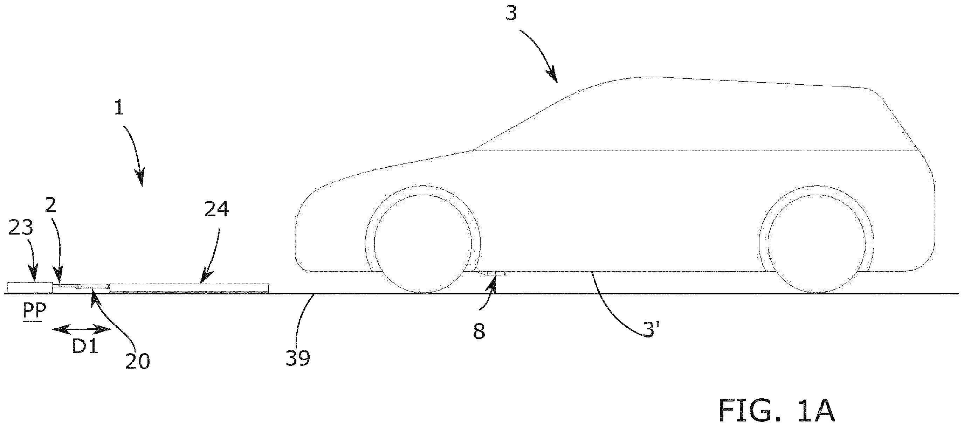

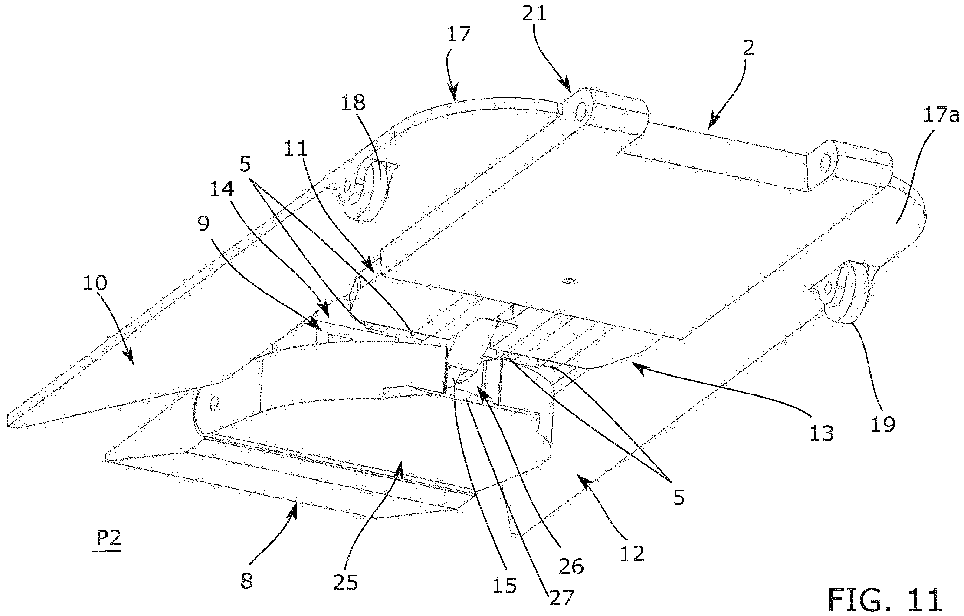

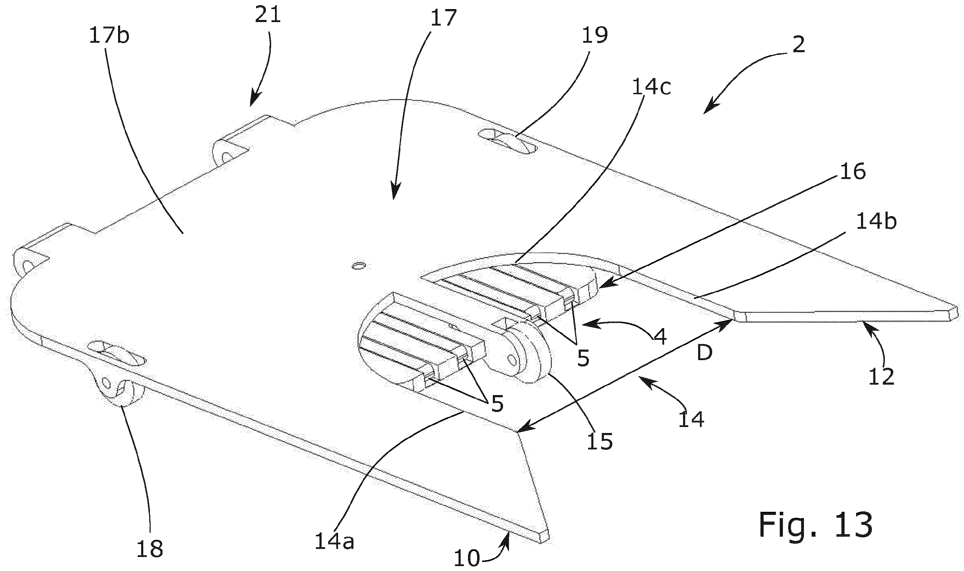

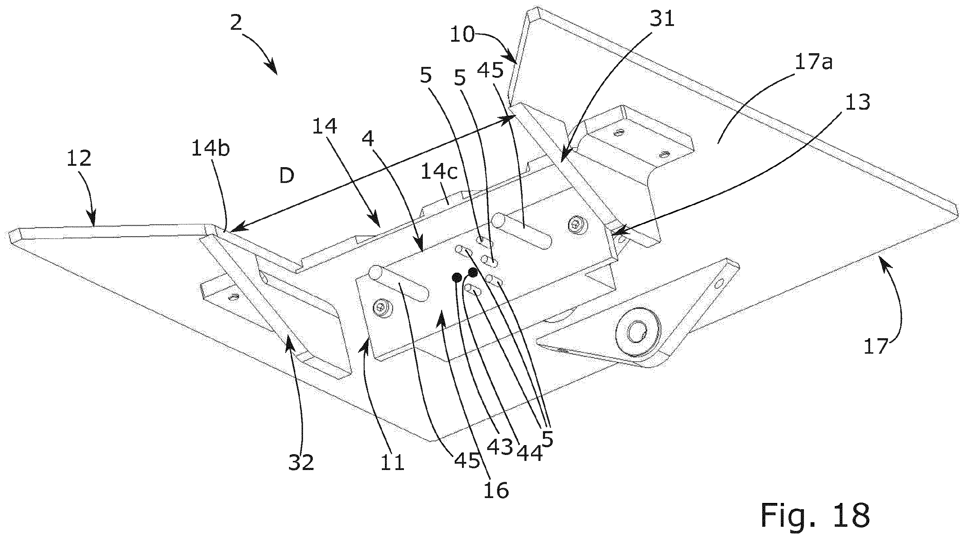

The figures 1A, 1B, 2, 3A, 3B, 4A, 4B, 4C, 5A, 5B, 6A, 6B, 6C, 7A, 7B, 8, 9A, 9B, 10, 11, 13, 15, 16 and 18 show a charger plug 2 for supplying electric energy to an electric vehicle 3, the charger plug 2 comprising at least a first electric connector 4 comprising at least one first electric contact 5, a support 17 comprising a bottom face 17a on which the first electric connector 4 is mounted and an upper face 17b arranged to slide on the bottom 3' of the electric vehicle 3, the first electric connector 4 being arranged to be coupled with a corresponding second electric connector 7 of a charging receiver 8 located on the bottom 3' of the electric vehicle 3 so that the at least one first electric contact 5 being electrically connected with at least one second electric contact 6 of the second electric connector 7.

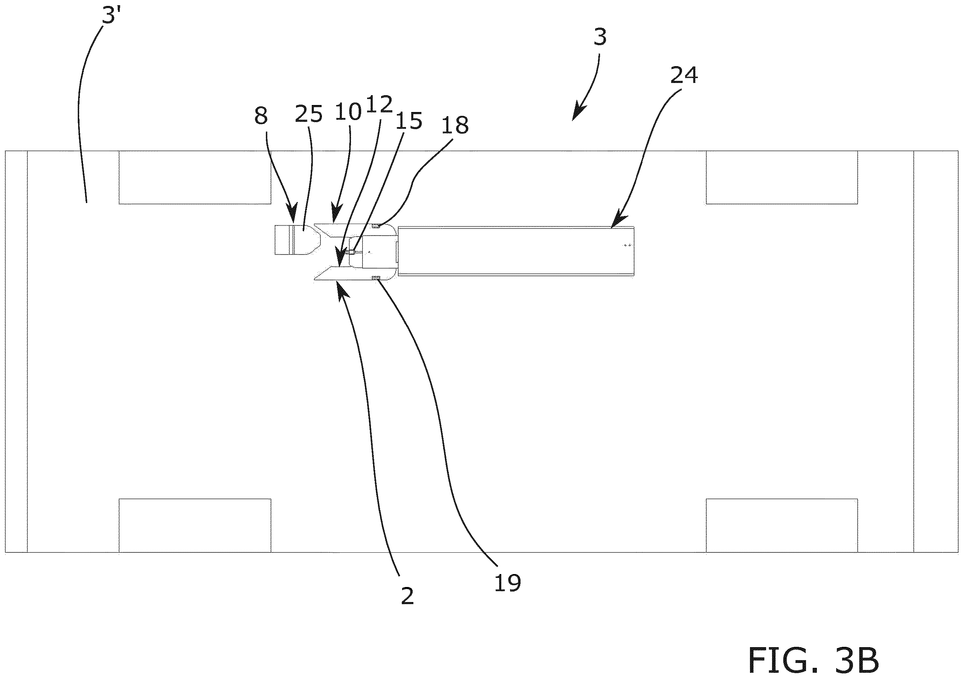

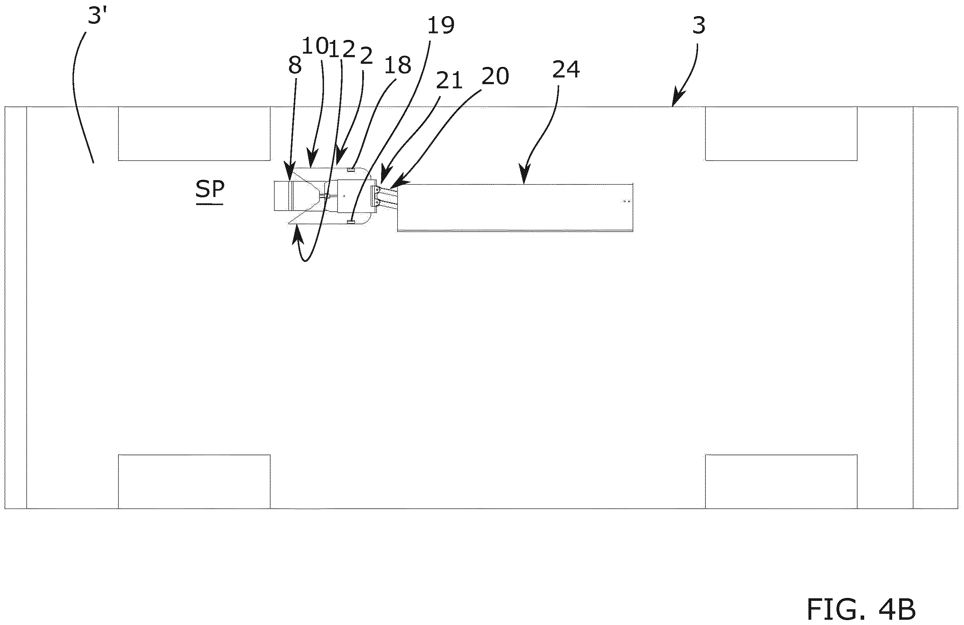

According to the invention and as shown in the figures 3B, 4B 4C, 5B, 6B, 7B, 9B, 10, 11, 13, 15, 16 and 18, the charger plug 2 is characterized in that the support 17 comprises guiding means 10, 12 comprising a reception area 14 arranged to surround at least partially the charging receiver 8 and arranged to align the first electric connector 4 and the second electric connector 7, when moving the charger plug 2 in the direction of the charging receiver 8 or conversely.

The guiding means 10, 12 are provided to mechanically align the first electric connector 4 with the second electric connector 7 of the charging receiver 8, so that they can connect properly to charge the battery of the electric vehicle 3 with electric energy. This auto-alignment between the charger plug 2 and the charging receiver 8 is shown in figure 4B. These mechanical guiding means 10, 12 advantageously are not likely to be damaged because of extreme temperatures, rain, snow, ice, external corrosion and/or dust.

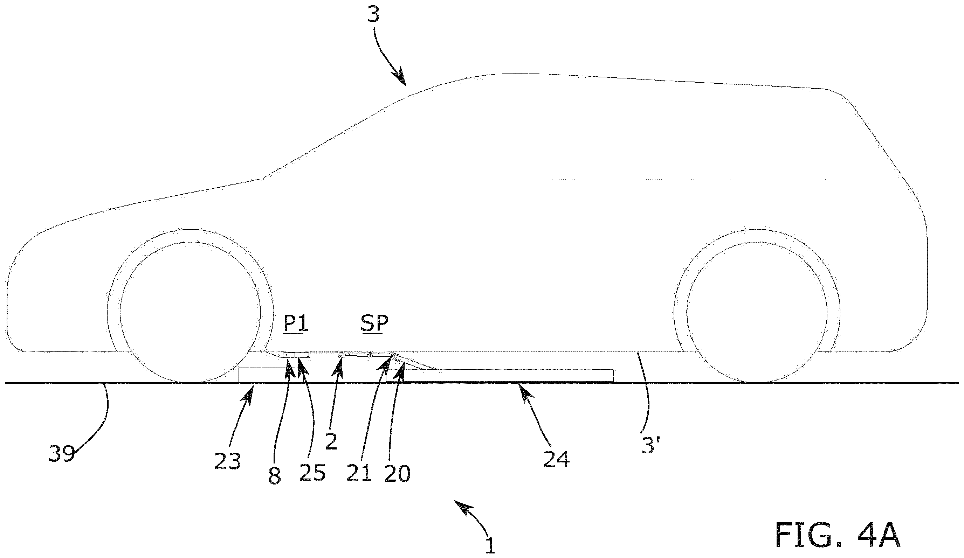

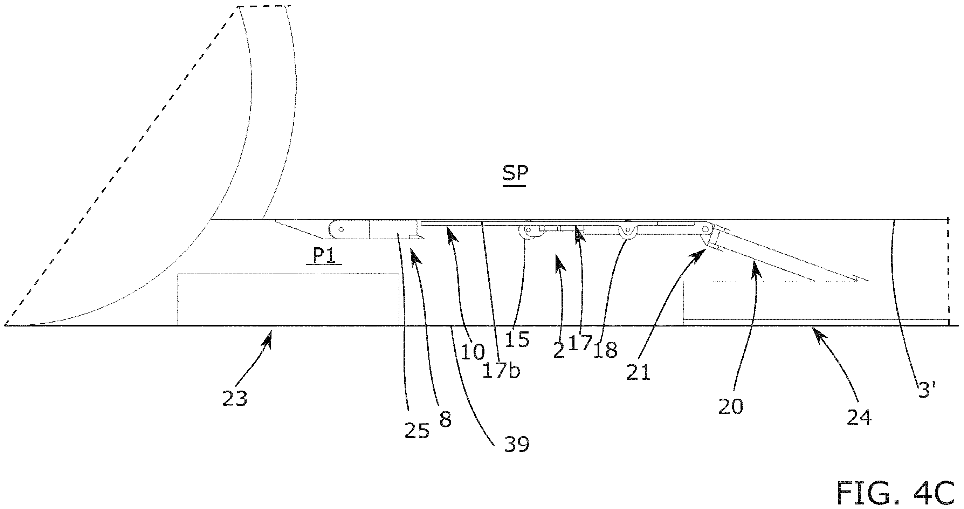

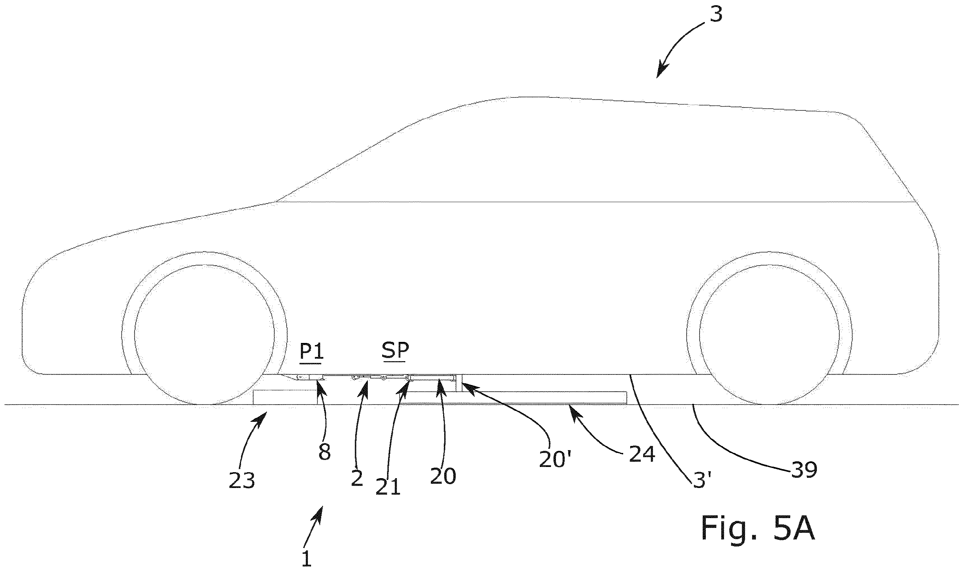

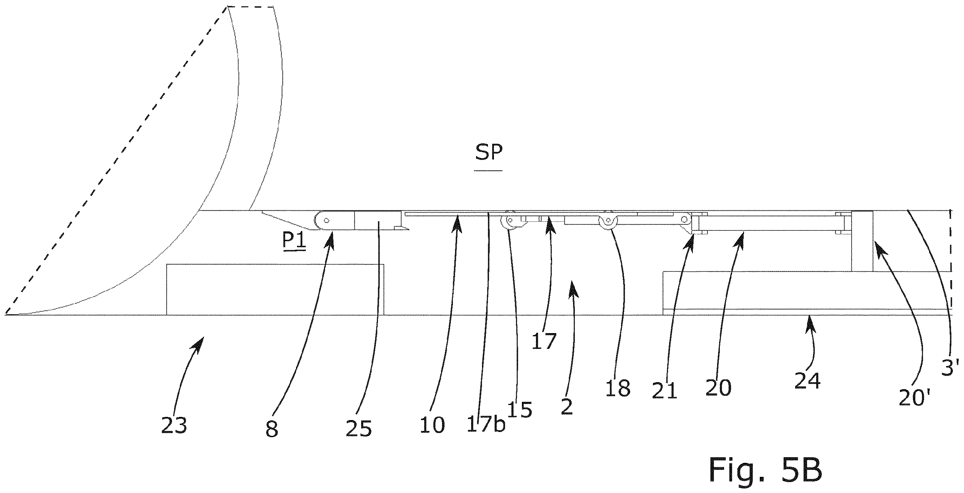

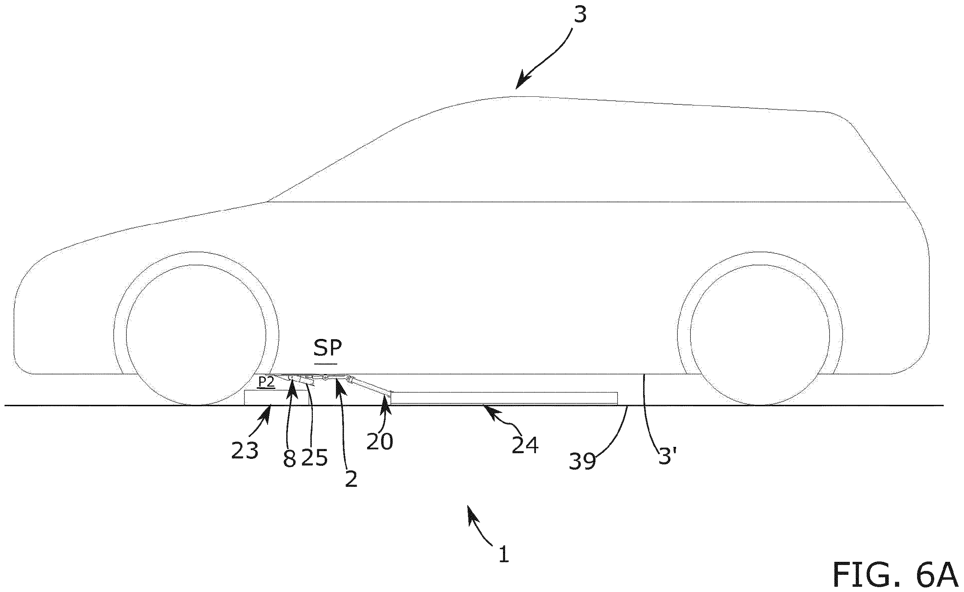

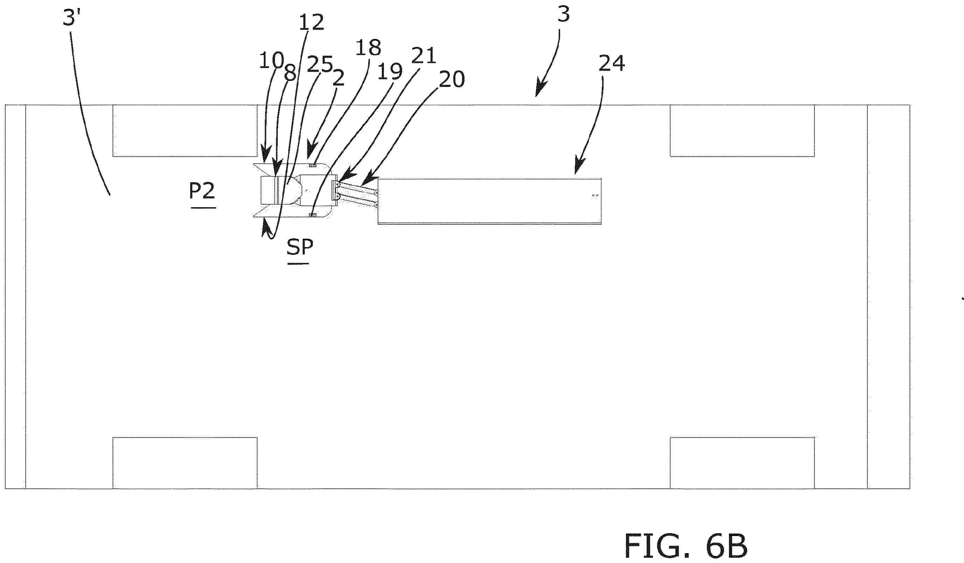

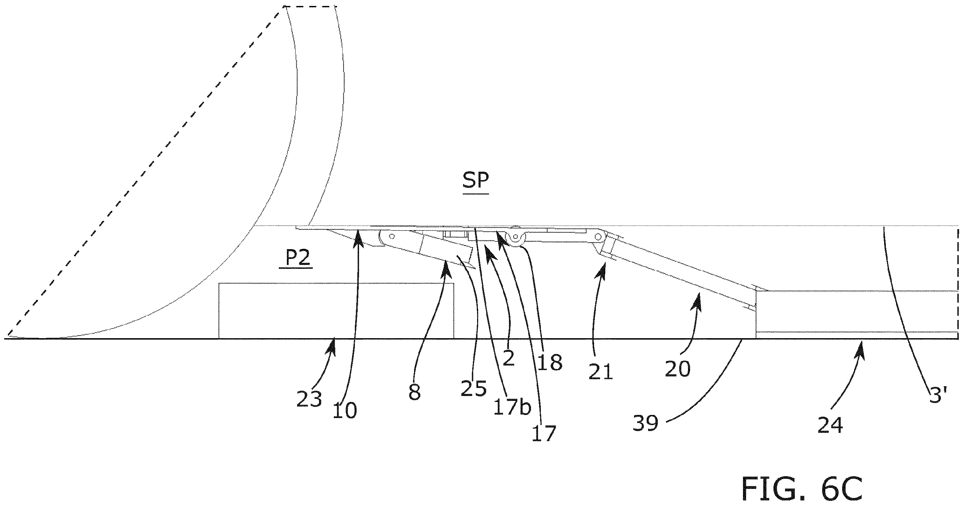

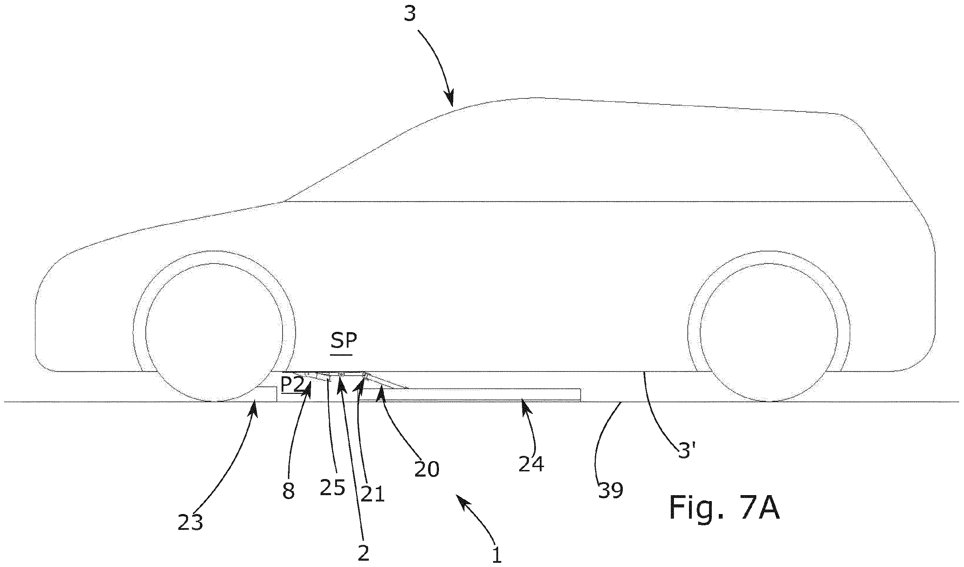

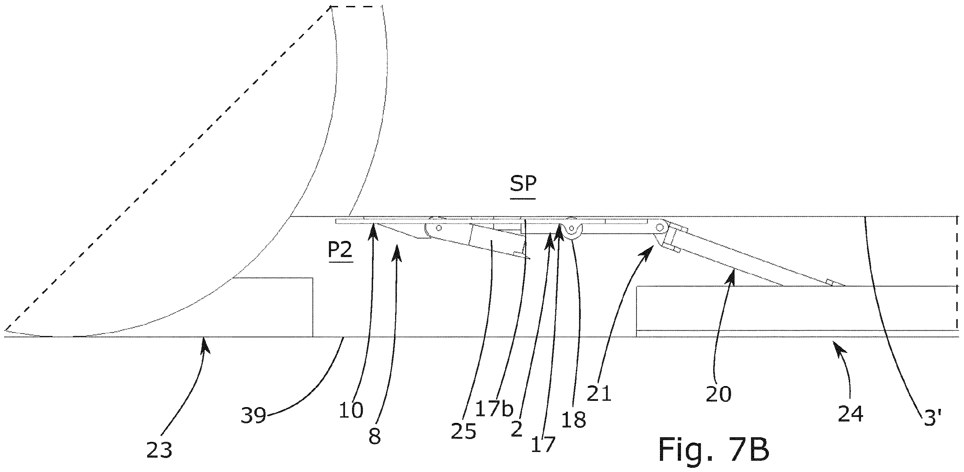

More particularly, the upper face 17b can slide on the bottom 3' of the electric vehicle 3 in the direction of the charging receiver 8 (figures 4A, 4B, 4C, 5A, 5B), until the guiding means 10, 12 lean against the charging receiver 8 and that the reception area 14 and a portion of complementary shape of the charging receiver 8 connect together (figures 6A, 6B, 6C, 10, 11, 15, 16). Or, the bottom 3' of the electric vehicle 3 can slide on the upper face 17b (figures 4A, 4B, 4C, 5A, 5B), until the guiding means 10, 12 lean against the charging receiver 8 and that the reception area 14 and a portion of complementary shape of the charging receiver 8 connect together (figures 7A, 7B, 9A, 9B, 10, 11, 15, 16).

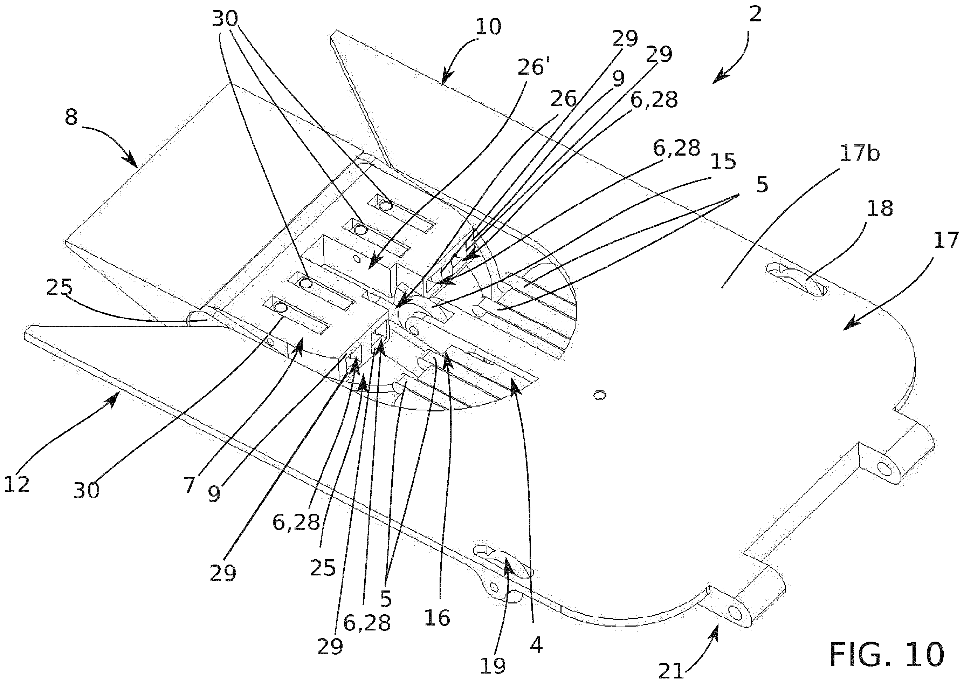

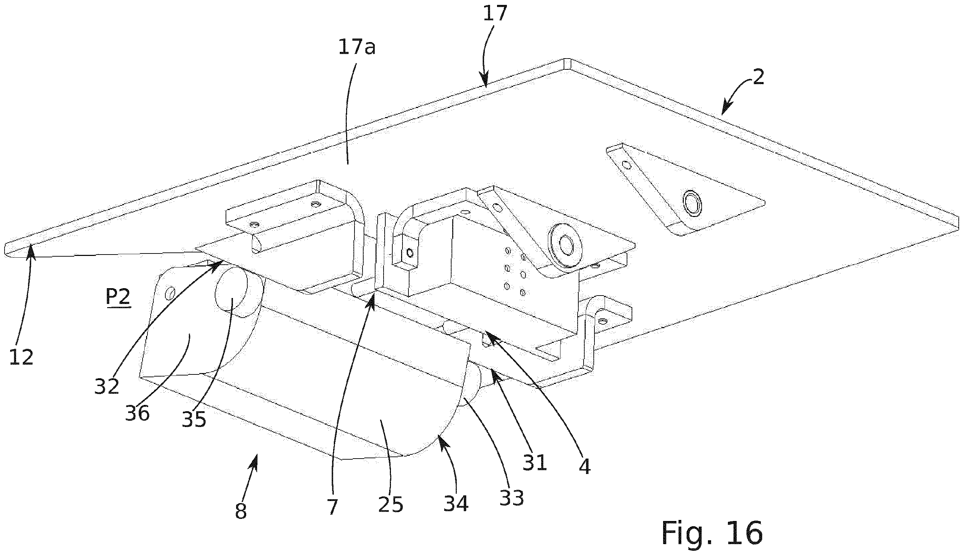

Preferably, the portion of complementary shape of the charging receiver 8 is located on the side of a second contact wall 9 of the charging receiver 8 comprising the second electric connector 7 (figures 10, 15 and 17). The reception area 14 is located on the side of a first contact wall 16 comprising the first electric connector 4 (figures 10, 13 and 18). Then, when the portion of complementary shape of the charging receiver 8 and the reception area 14 connect, the first electric connector 4 is in front of the second electric connector 7. When, the charging receiver 8 comprises a protection lid 25, the portion of complementary shape consists of a portion of this protection lid 25. Then, when the portion of the protection lid 25 and the reception area 14 connect, the first electric connector 4 is in front of the protection lid 25 behind which the second electric connector 7 is located as long as the protection lid 25 covers the second electric connector 7. When the protection lid 25 uncovers the second electric connector 7, then the first electric connector 4 is in front of the second electric connector 7 (figures 10 and 16).

Preferably, the guiding means comprises a first member 10 projecting from the support 17 on a first lateral side 11 of the first electric connector 4 and a second member 12 projecting from the support 17 on a second lateral side 13 of the first electric connector 4 respectively delimiting a first portion 14a and a second portion 14b of the reception area 14, the first member 10 and the second member 12 being positioned at a predetermined distance D from one to another and being separated from one to another by a base portion 14c of the reception area 14.

Preferably, the reception area 14 has a U-shaped delimited by the first portion 14a, the second portion 14b and the base portion 14c (figures 10, 11, 13, 15 and 18).

Preferably, the charger plug 2 comprises means 15; 31, 32 for opening a protection lid 25 of the charging receiver 8 arranged to cooperate with corresponding means 26; 33, 35 for opening the protection lid 25 of the charging receiver 8.

These means for opening 15, 31, 32 the protection lid 25 of the charging receiver 8 are provided to automatically open the protection lid 25, after the connection between the portion of the protection lid 25 and the reception area 14, so that the protection lid 25 uncovers the second electric connector 7 to enable the electric connection between the second electric contact 6 and the first electric contact 5. Thus, the protection lid 25 enables protecting the second electric connector 7 from the outdoor conditions as long as it is not connected to first electric connector 4, without disturbing a subsequent connection with the first electric connector 4, thanks to the means for opening 26, 33, 35 the protection lid 25.

In a first preferred embodiment shown in figures 10, 11 and 13, the means for opening the protection lid 25 consist of a protrusion 15 projecting from the reception area 14 of the support 17, the protrusion 15 being arranged to cooperate with the corresponding means for opening the protection lid 25 of the charging receiver 8 consisting of a guiding slot 26 of the protection lid 25 comprising an inclined wall 27.

This protrusion 15 is provided to lean against the inclined wall 27, when the charger plug 2 and the charging receiver 8 are moved relative to each other, in order to rotate the protection lid 25 from a first position PI to a second position P2, in the clockwise direction and then uncover the second electric connector 7.

According to a non-limitative specificity of the first embodiment, the protrusion consists of a wheel 15 (figures 10, 11 and 13).

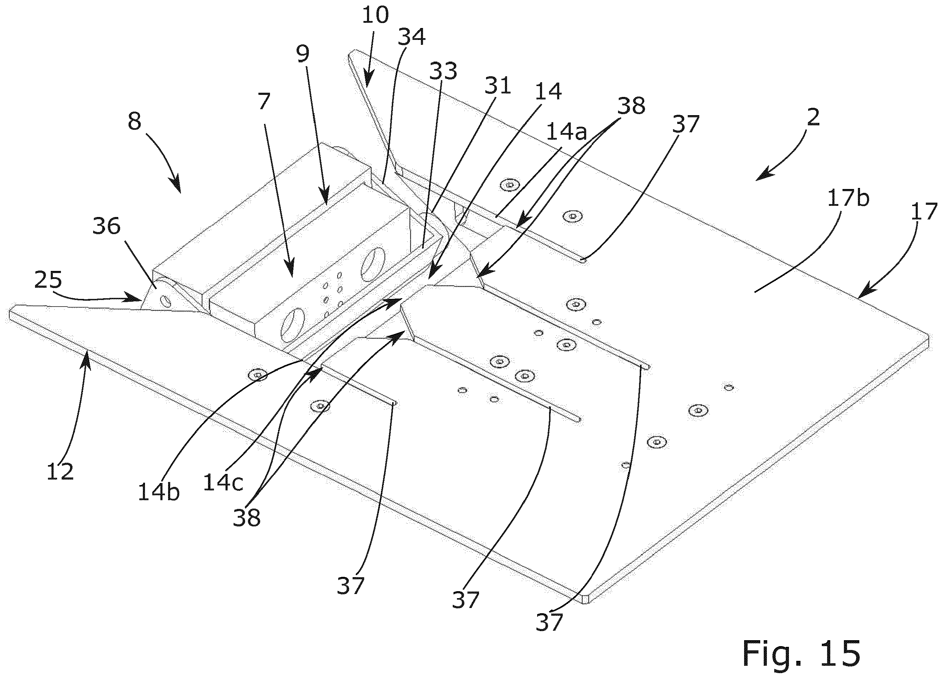

In a second preferred embodiment shown in figures 15, 16 and 18, the means for opening the protection lid 25 comprise a first inclined guide rail 31 projecting from the bottom face 17a of the support 17 and surrounding the first lateral side 11 of the first electric connector 4, and a second inclined guide rail 32 projecting from the bottom face 17a of the support 17 and surrounding the second lateral side 13 of the first electric connector 4, the first inclined guide rail 31 and the second inclined guide rail 32 being arranged to cooperate respectively with the corresponding means for opening the protection lid 25 of the charging receiver 8 consisting of a first protrusion 33 projecting from a first lateral wall 34 of the protection lid 25 of the charging receiver 8 and a second protrusion 35 projecting from a second lateral wall 36 of the protection lid 25.

These first inclined guide rail 31 and second inclined guide rail 32 respectively are provided to lean against the first protrusion 33 and second protrusion 35, when the charger plug 2 and the charging receiver 8 are moved relative to each other, in order to rotate the protection lid 25 from a first position P1 to a second position P2, in the clockwise direction and then uncover the second electric connector 7.

According to a specificity of this second preferred embodiment, the first inclined guide rail 31 protrudes perpendicularly to the bottom face 17a along the first portion 14a of the reception area 14 and the second inclined guide rail 32 protrudes perpendicularly to the bottom face 17a along the second portion 14b of the reception area 14.

Preferably and as shown in figures 10, 11, 13, 15, 16 and 18, the support 17 has a planar shape comprising the bottom face 17a on which the first electric connector 4 is mounted and the upper face 17b arranged to slide on the bottom 3' of the electric vehicle 3.

This planar shape is provided to ease the sliding of the support 17 with respect to the bottom 3' of the electric vehicle 3.

According to a preferred but not limitative construction of the invention, the support 17 comprises at least a guiding wheel 18, 19, as shown in figures 3B, 4B, 4C, 5B, 6B, 6C, 7B, 9B, 10, 11 and 13.

This guiding wheel 18, 19 is provided to improve the sliding of the charger plug 2 on the bottom 3' of the electric vehicle 3.

According to a specificity of this construction of the invention, a first guiding wheel 18 and a second guiding wheel 19 project from the support 17 through the bottom face 17a and the upper face 17b, as shown in figures 3B, 4B, 4C, 5B, 6B, 6C, 7B, 9B, 10, 11 and 13.

According to another preferred but not limitative construction of the invention and as shown in figure 15, the upper face 17b of the support 17 comprises a plurality of grooves 37, each groove 37 extending on a longitudinal direction of the support 17 and leading to the reception area 14 by an open end 38, each groove 37 being arranged to receive a corresponding pin (not shown) protruding from the bottom 3' of the electric vehicle 3.

This plurality of grooves 37 is provided to improve the guiding of the support 17 with respect to the bottom 3' of the electric vehicle 3.

According to a specificity of the groove 37, the open end 38 has a funnel shape.

This funnel shape is provided to ease the insertion of the pins in the grooves 37.

Preferably, the charger plug 2 comprises a circuit breaker (not shown) electrically connected to the at least first electric connector 4.

This circuit breaker, for instance an electrical fuse, is provided to reduce short circuit currents in case of an error and to decrease the sectional area of a supply cable of the charging station. Otherwise a thicker cable is needed even in the case of a medium power charger.

Preferably, the charger plug 2 comprises an inlet fluid connector 43 and an outlet fluid connector 44.

Preferably, the charger plug 2 comprises at least one positioning pin 45.

Preferably, the first electric connector 4 is a standard connector according to the standard IEC 62196-1/-2/-3.

The figures 1A to 9B show a charging station 1 comprising at least one arm 20, 20' connected to a charger plug 2 by connection means 21, and comprising at least one actuator 22 to move the at least one arm 20, 20'.

According to the invention, the charging station 1 is characterized in that it comprises a charger plug 2 according to the invention.

Preferably, the at least one actuator 22 is arranged to move the at least one arm 20, 20' in rotation and/or in translation.

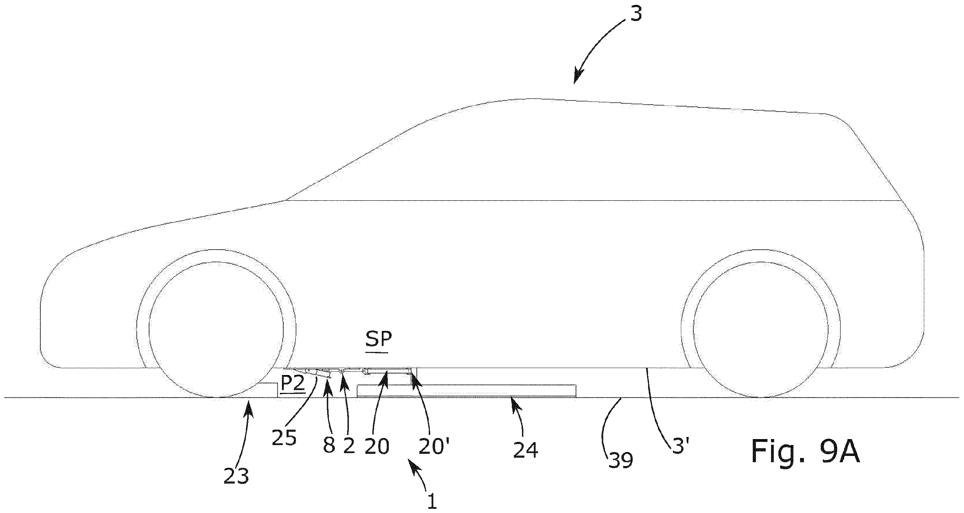

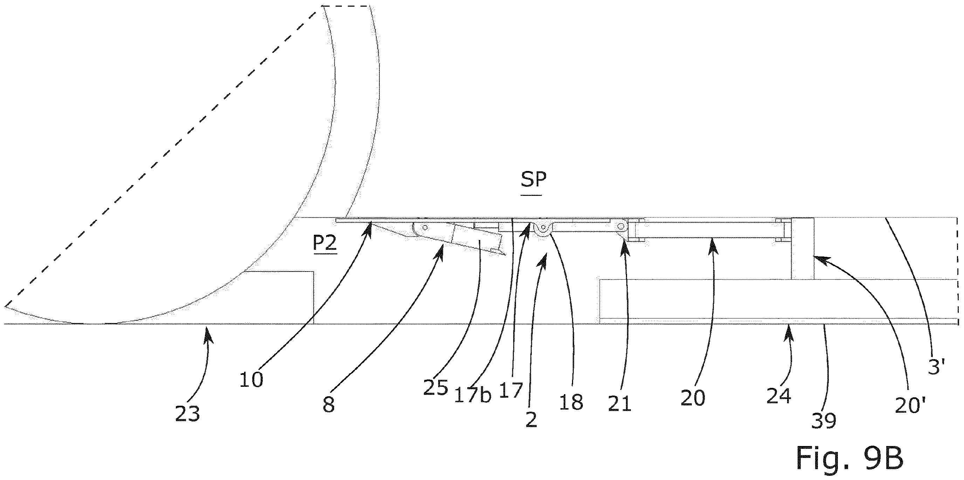

According to a preferred but not limitative construction of the invention, the charging station 1 comprises a first arm 20 and a second arm 20', the first arm 20 being connected to the charger plug 2 by the connection means 21, and the second arm 20' being connected to the at least one actuator 22. The first arm 20 and the second arm 20' can be orthogonal (figures 5A, 5B, 9A and 9B). The actuator 22 can move the second arm 20' in translation. For instance, the translation can be along a vertical direction to move the charger plug 2 in the direction of the bottom 3' of the electric vehicle 3 and/or the translation can be along the bottom 3' of the electric vehicle 3.

According to an alternative preferred but not limitative construction of the invention, the charging station 1 comprises one arm 20 connected to the charger plug 2 by the connection means 21, and to the at least one actuator 22. The actuator 22 can move the arm 20 in translation and/or in rotation. For instance, the translation can be along a horizontal direction to move the charger plug 2 outside of a first protection housing 23, and/or the rotation can be in a clockwise direction to move the charger plug 2 in the direction of the bottom 3' of the electric vehicle 3 and/or the translation can be along the bottom 3' of the electric vehicle 3.

According to a preferred but not limitative construction of the invention and as shown in figures 1A, 1B, 2, 3A, 4A, 4C, 5A, 5B, 6A, 6C, 7A, 7B, 8, 9A and 9B, the charging station 1 comprises a first protection housing 23 arranged to protect the charger plug 2 and a second protection housing 24 arranged to protect the actuator 22, the first protection housing 23 and the second protection housing 24 being aligned and being separated from one to another by a distance D1.

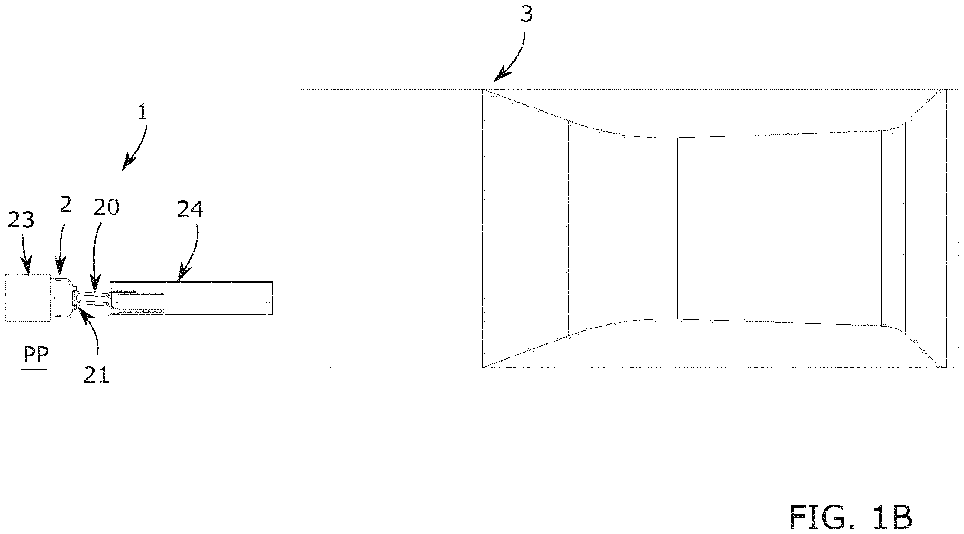

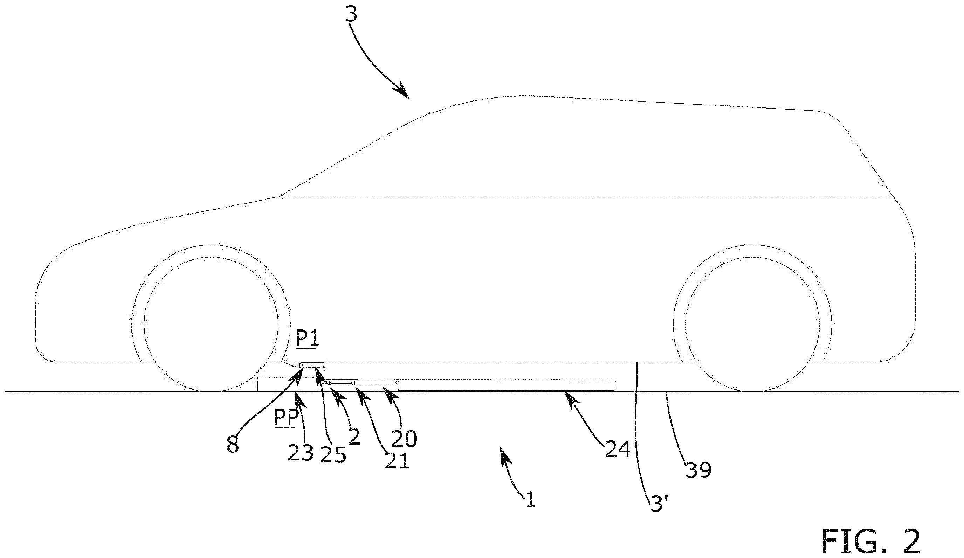

The first protection housing 23 is provided to protect the charger plug 2 from the outdoor conditions, when the charging station 1 is not in use (figures 1A, 1B and 2). The second protection housing 24 is provided to protect the actuator 22 from outdoor conditions (figures 1A to 9B).

According to another preferred but not limitative construction of the invention, the charging station comprises a single protection housing (not shown) arranged to protect the charger plug 2, the arm 20, 20' and the actuator 22 .

Preferably, the charging station 1 comprises at least a power supply system (not shown) to provide electric energy.

Preferably, the charging station 1 comprises at least a supply cable (not shown) electrically connected to the charger plug 2, more particularly to the first electric connector 4 and to the power supply system.

Preferably, the charging station 1 comprises a cooling system (not shown) to maintain the battery within an acceptable temperature range during a charging session.

Preferably, the charging station 1 comprises fluid lines (not shown) connected to the charger plug 2, more particularly to the inlet and outlet fluid connectors and to the cooling system.

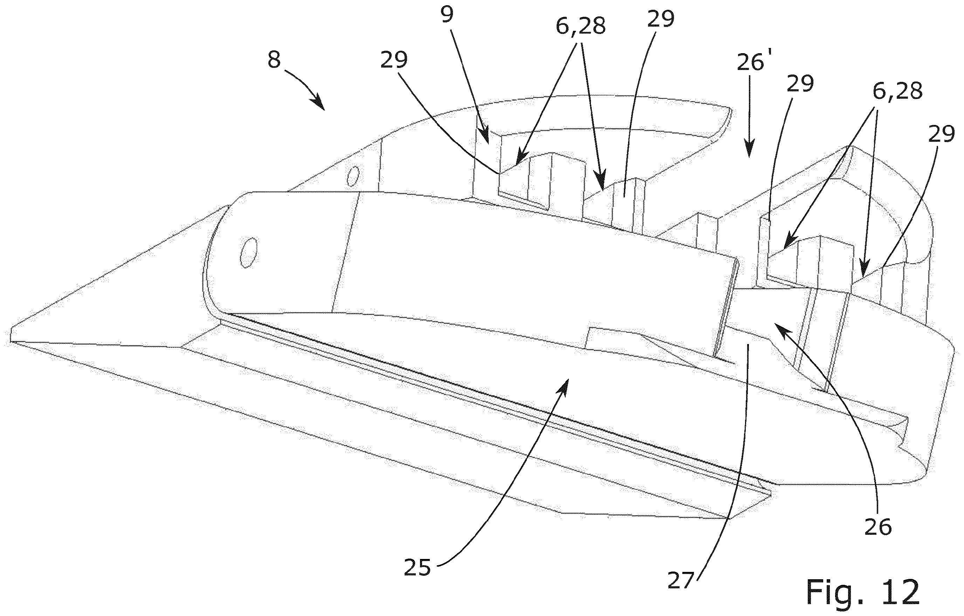

The figures 1A, 2, 3A, 3B, 4A, 4B, 4C, 5A, 5B, 6A, 6B, 6C, 7A, 7B, 8, 9A, 9B, 10, 11, 12, 15, 16 and 17 show a charging receiver 8 for an electric vehicle 3 suitable for being mounted on the bottom 3' of the electric vehicle 3 and arranged to be coupled with the charger plug 2 according to the invention, the charging receiver 8 comprising at least one second electric connector 7 arranged to be coupled with the first electric connector 4 of the charger plug 2, the second electric connector 7 comprising at least one second electric contact 6 arranged to be electrically coupled with at least one first electric contact 5 of the first electric connector 4 of the charger plug 2, the charging receiver 8 comprising a rotatable protection lid 25 movable in rotation from a first position PI where the protection lid 25 covers the second electric connector 7 to protect the second electric contact 6 and a second position P2 where the protection lid 25 uncovers the second electric connector 7 to enable the electric connection between the second electric contact 6 and the first electric contact 5.

According to the invention, the charging receiver 8 is characterized in that the protection lid 25 comprises means 26; 33, 35 for opening the protection lid 25, arranged so that the protection lid 25 tilts from the first position PI to the second position P2 when it cooperates with corresponding means 15; 31, 32 for opening the protection lid 25 of the charger plug 2.

The protection lid 25 enables to protect the second electric connector 7 from the outdoor conditions, when the charging receiver 8 is not in use. These means 26; 33, 35 for opening the protection lid 25 of the charging receiver 8 are provided to automatically open the protection lid 25, so that the protection lid 25 uncovers the second electric connector 7, to enable the connection between the first electric connector 4 and the second electric connector 7.

In a first preferred embodiment shown in figures 10, 11 and 12, the means for opening the protection lid 25 consist of a guiding slot 26 of the protection lid 25 comprising an inclined wall 27, arranged to be coupled with the corresponding means for opening the protection lid 25 of the charger plug 2 consisting of a protrusion 15 projecting from a reception area 14 of the charger plug 2, the guiding slot 26 being arranged so that the protection lid 25 tilts from the first position PI to the second position P2 when the protrusion 15 is engaged with the guiding slot 26.

This guiding slot 26 is provided to receive the protrusion 15, which can then slide along the inclined wall 27, when the charger plug 2 and the charging receiver 8 are moved relative to each other, in order to rotate the protection lid 25 from the first position P1 to the second position P2, in the clockwise direction and then uncover the second electric connector 7.

According to a specificity of this first preferred embodiment, a second contact wall 9 of the second electric connector 7 comprises an interlocking area 26' aligned with the guiding slot 26 of the protection lid 25, arranged to be coupled with the protrusion 15 projecting from the reception area 14 of the charger plug 2.

This interlocking area 26' is provided to receive the protrusion 15 after the connection between the first electric connector 4 and the second electric connector 7.

In a second preferred embodiment shown in figures 15, 16 and 17, the means for opening the protection lid 25 comprise a first protrusion 33 projecting from a first lateral wall 34 of the protection lid 25 and a second protrusion 35 projecting from a second lateral wall 36 of the protection lid 25, the first protrusion 33 and the second protrusion 35 being arranged to cooperate with the corresponding means for opening the protection lid 25 of the charger plug 2 consisting of a first inclined guide rail 31 and a second inclined guide rail 32 so that the protection lid 25 tilts from the first position P1 to the second position P2 when the first inclined guide rail 31 leans against and slides on the first protrusion 33 and the second inclined guide rail 32 leans against and slides on the second protrusion 35.

These first protrusion 33 and second protrusion 35 are provided to enable the first inclined guide rail 31 and the second inclined guide rail 32 to slide along them, when the charger plug 2 and charging receiver 8 are moved relative to each other, in order to rotate the protection lid 25 from the first position P1 to the second position P2, in the clockwise direction and then uncover the second electric connector 7.

According to a specificity of these first and second preferred embodiments, the protection lid 25 is connected with the second electric connector 7 by return means to enable the automatic return of the protection lid 25 from the second position P2 to the first position P1, when the protrusion 15 is disengaged from the guiding slot 26 or when the first and second inclined guide rails 31, 32 are respectively released from the first and second protrusions 33, 35.

This return means, in a rest position, are provided to maintain the protection lid 25 in the first position P1 and to automatically return the protection lid 25 in the first position P1, when the protection lid 25 is deviated from the first position P1.

More particularly, when the guiding slot 26 receive the protrusion 15, this protrusion 15 exerts a force against the return means to stretch them and to rotate the protection lid 25 in the clockwise direction to uncover the second electric connector 7. When this protrusion 15 no longer exerts this force against the return means, the return means return in their rest position and the protection lid 25 rotates in the anticlockwise direction to cover the second electric connector 7.

According to a preferred but not limitative construction of the invention and as shown in figure 10, the second female electric connector 7 comprises a plurality of recesses 28, each recess 28 comprises one of the second electric contact 6, each recess 28 comprises a first opening 29 located on the second contact wall 9 for the engagement of the first electric contact 5 of the first male electric connector 4 and a second opening 30.

This second opening 30 is provided to evacuate the dust which could be located in the recess 28, when the first male electric connector 4 and the second female electric connector 7 connect together. Indeed, the first male electric connector 4 pushes the dust in the direction of the second opening 30, when inserted in the recess 28 through the first opening 29. Thus, the second electric contact 6 can be cleaned during the connection which enables a proper contact between the first electric contact 5 and the second electric contact 6.

Preferably, the protection lid 25 is pivotally mounted relative to an axis of the second contact wall 9 of the charging receiver 8.

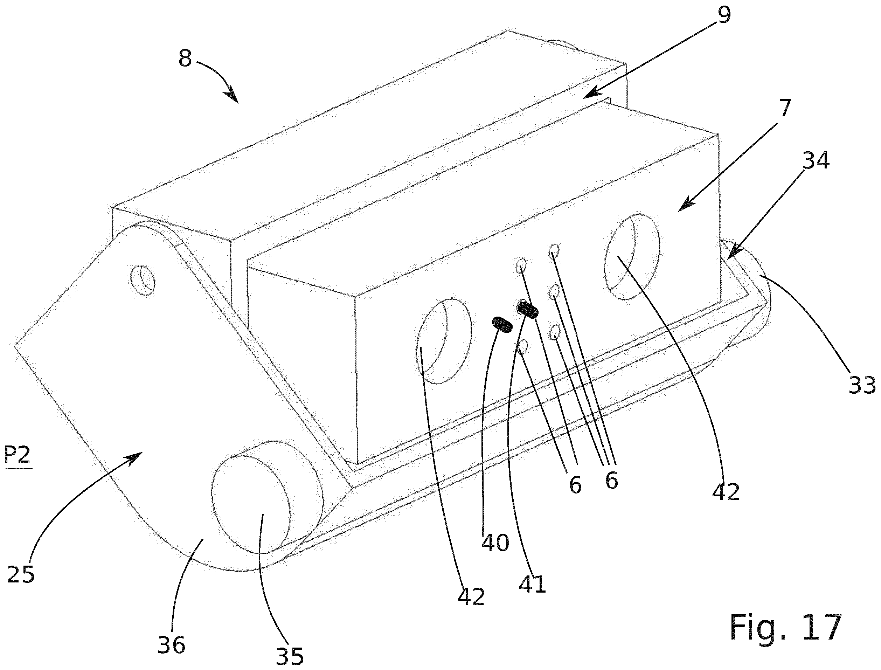

Preferably, the first protrusion 33 and the second protrusion 35 have a cylinder shape (figures 16 and 17).

Preferably, the charging receiver 8 comprises an inlet fluid connector 41 and an outlet fluid connector 40.

Preferably, the charging receiver 8 is suitable to be electrically connected to the battery of the electric vehicle 3.

Preferably, the charging receiver 8 comprises at least one positioning hole 42.

Preferably, the second electric connector 7 is a standard connector according to the standard IEC 62196-1/-2/-3.

The invention also relates to an assembly comprising the charger plug 2 according to the present invention and the charging receiver 8 according to the present invention.

When the charger plug 2 and the charging receiver 8 are connected together, the first electric connector 4 of the charger plug 2 is in electrical contact with the first electric connector 7 of the charging receiver 8.

The invention also relates to a method for connecting a charging receiver 8 of an electric vehicle 3 and a charger plug 2 of a charging station 1, the charging station 1 being located on the ground 39 and being suitable to be located underneath the bottom 3' of the electric vehicle 3, the charging station 1 comprising the charger plug 2 which comprises a first electric connector 4, at least one arm 20, 20' connected to the charger plug 2 by connection means 21 and at least an actuator 22 to move the at least one arm 20, 20', the charging receiver 8 being mounted on the bottom 3' of the electric vehicle 3 and comprising a second electric connector 7, the charger plug 2 comprising guiding means 10, 12 comprising a reception area 14 arranged to surround at least partially the charging receiver 8 and arranged to align the first electric connector 4 and the second electric connector 7, when moving the charger plug 2 in the direction of the charging receiver 8 or conversely, method comprising the steps of :
when the charger plug 2 leans against the bottom 3' of the electric vehicle 3 in a sliding position SP:
   A) moving the electric vehicle 3 in translation along a parallel direction relatively to the charger plug 2, to move the charging receiver 8 in the direction of the charger plug 2 so that the charger plug 2 slides on the bottom 3' of the electric vehicle 3 (figures 7A, 7B, 8, 9A, 9B), or
   B) moving the arm 20, 20' by means of the actuator 22 in translation along the bottom 3' of the electric vehicle 3 to move the charger plug 2 in the direction of the charging receiver 8 so that the charger plug 2 slides on the bottom 3' of the electric vehicle 3 (figures 4A, 4B, 4C, 5A, 5B, 6A, 6B and 6C),
when moving the electric vehicle 3 or the arm 20, 20' according to the step A) or B):
   C) aligning the first electric connector 4 and the second electric connector 7 by means of the guiding means 10, 12 of the charger plug 2, then
   D) tilting the protection lid 25 movable in rotation from a first position PI where the protection lid 25 covers the second electric connector 7 to protect the second electric contact 6 to a second position P2 where the protection lid 25 uncovers the second electric connector 7 by means of corresponding means 15, 33, 35, 26, 31, 32 for opening the protection lid 25 of the charging receiver 8 and of the charger plug 2, then
   E) mechanically and electrically connecting the first electric connector 4 and the second electric connector 7.

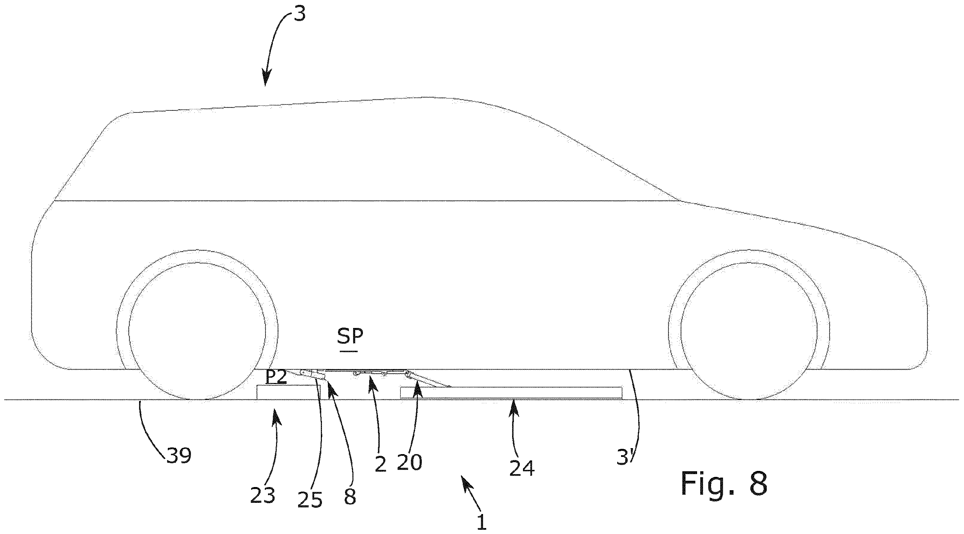

According to step A), the movement of the electric vehicle 3 enables to move the charger receiver 8 in the direction of the charger plug 2 while being guided by the bottom 3' of the electric vehicle 3. Preferably, the electric vehicle 1 can be moved in rear motion (figures 7A and 9A) or in a forward motion (figure 8) depending of the relative position of the charger plug 2 and the charging receiver 8.

According to step B), the movement of the arm 20, 20' enables to move the charger plug 2 in the direction of the charger receiver 8 while being guided by the bottom 3' of the electric vehicle 3.

According to step C), this alignment enables a subsequent proper connection, in order to charge the battery of the electric vehicle 3 during a charging session.

According to step D), this tilting of the protection lid 25 enables to uncover the second electric connector 7 only during the charging session, to protect them from the outdoor conditions the rest of the time.

According to step E), the connection between the first electric connector 4 and the second electric contact 7 enable to charge the battery of the electric vehicle with electric energy during the charging session.

According to a preferred but not limitative embodiment of the invention, when the charger plug 2 and the arm 20, 20' are located inside a single protection housing (not shown) in a protection position PP, before the steps A) or B) to E):
G) moving the arm 20, 20' by means of the actuator 22 in translation along a vertical direction to move the charger plug 2 in the direction of the bottom 3' of the electric vehicle 3 in the sliding position SP, or
H) moving the arm 20, 20' by means of the actuator 22 in rotation to move the charger plug 2 in the direction of the bottom 3' of the electric vehicle 3 in the sliding position SP.

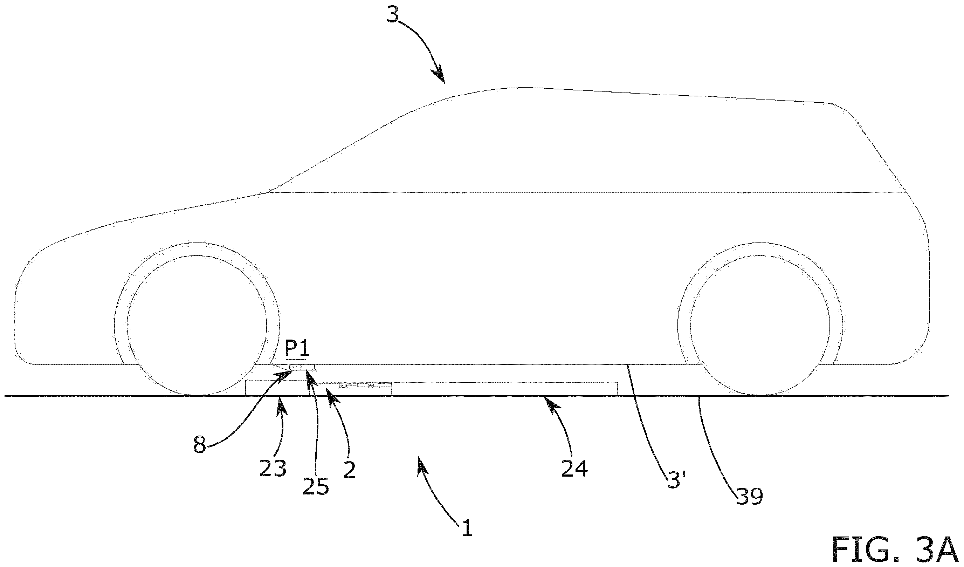

According to another preferred but not limitative embodiment of the invention, when the charger plug 2 is located inside a first protection housing 23 in a protection position PP, and the arm 20, 20' and the actuator 22 are located inside a second protection housing 24, before the steps A) or B) to E):
I) moving the arm 20, 20' by means of the actuator 22 in translation along a horizontal direction to move the charger plug 2 outside of the first protection housing 23 (figures 1A, 1B, 2, 3A and 3B), then
K) moving the arm 20, 20' by means of the actuator 22 in translation along a vertical direction to move the charger plug 2 in the direction of the bottom 3' of the electric vehicle 3 in the sliding position SP (figures 5A and 5B), or
L) moving the arm 20, 20' by means of the actuator 22 in rotation to move the charger plug 2 in the direction of the bottom 3' of the electric vehicle 3 in the sliding position SP (figures 3A, 4A and 4C).

Preferably, the charger plug 2 is arranged according to the invention described above.

Preferably, the charging station 1 is arranged according to the invention described above.

Preferably, the charging receiver 8 is arranged according to the invention described above.

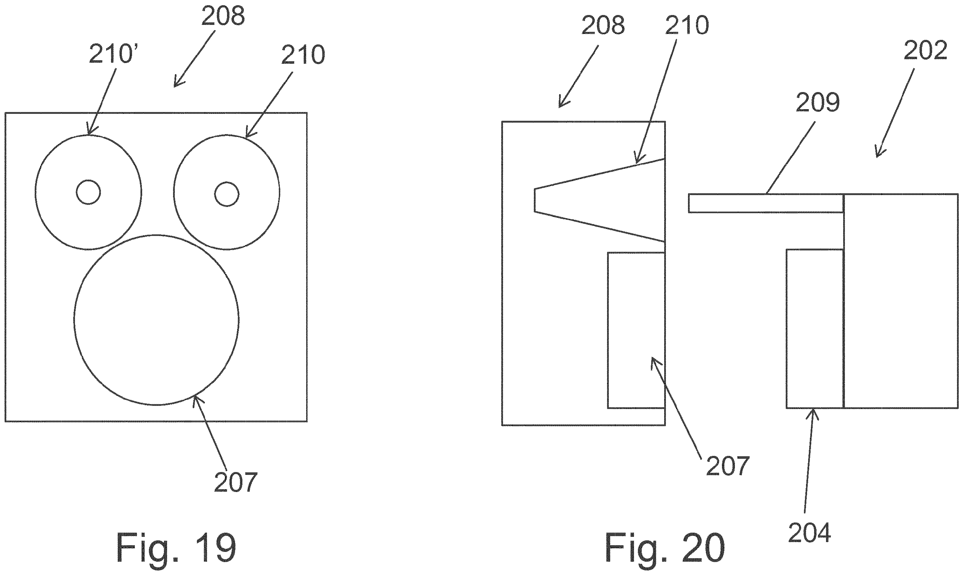

The invention also relates to a charger plug 202, according to a third embodiment, as shown in figures 20, 22A to 23B, for supplying electric energy from a power supply to a battery of an electric vehicle 203. The charger plug 202 comprises at least a first electric connector 204 comprising at least a first electric contact, the first electric connector 204 being arranged to be coupled with a corresponding first electric connector 207 of a charging receiver 208 according to a third embodiment described hereinafter, so that the at least first electric contact being electrically connected with corresponding first electric contact of the second electric connector 207, the charger plug 202 comprising at least a first positioning protrusion 209 arranged to be only mechanically coupled with a first recess 210 of the charging receiver 208.

The first positioning protrusion 209 is provided to facilitate the alignment of the first electric connector 204 with the second electric connector of the charging receiver 208.

Preferably, the charger plug 202 comprises the first positioning protrusion 209 and a second positioning protrusion being arranged to be only mechanically coupled with a second recess 210' of the charging receiver 208.

According to a first preferred specificity, the first electric connector 204 comprises a first electric contact, a second electric contact and a third electric contact, the first electric contact being suitable to be electrically connected to a first AC line of the power supply, the second electric contact being suitable to be electrically connected to a neutral line of the power supply, the third electric contact being suitable to be electrically connected to a ground line.

Preferably, the charger plug 202 according to this first preferred specificity is arranged to be connected to the charging receiver 208 described hereinafter according to the first preferred specificity.

According to a second preferred specificity, the first electric connector 204 comprises a first electric contact, a second electric contact, a third electric contact, a fourth electric contact and a fifth electric contact, the first electric contact being suitable to be electrically connected to a first AC line of the power supply, the second electric contact being suitable to be electrically connected to a second AC line of the power supply, the third electric contact being suitable to be electrically connected to a third AC line of the power supply, the fourth electric contact being suitable to be electrically connected to a neutral line of the power supply, the fifth electric contact being suitable to be electrically connected to a ground line.

Preferably, the charger plug 202 according to this second preferred specificity is arranged to be connected to the charging receiver 208 described hereinafter according to the second preferred specificity.

According to a third preferred specificity, the first electric connector 204 comprises a first electric contact, a second electric contact and a third electric contact, the first electric contact being suitable to be electrically connected to a first negative DC line of the power supply, the second electric contact being suitable to be electrically connected to a second positive DC line of the power supply and the third electric contact being suitable to be electrically connected to a ground line.

Preferably, the charger plug 202 according to this third preferred specificity is arranged to be connected to the charging receiver 208 described hereinafter according to the particularly of the second preferred specificity or to the third preferred specificity.

Preferably, the first electric connector 204 comprises a first communication contact and a second communication contact.

Preferably, the first electric connector 204 is a standard connector according to the standard IEC 62196-1/-2/-3.

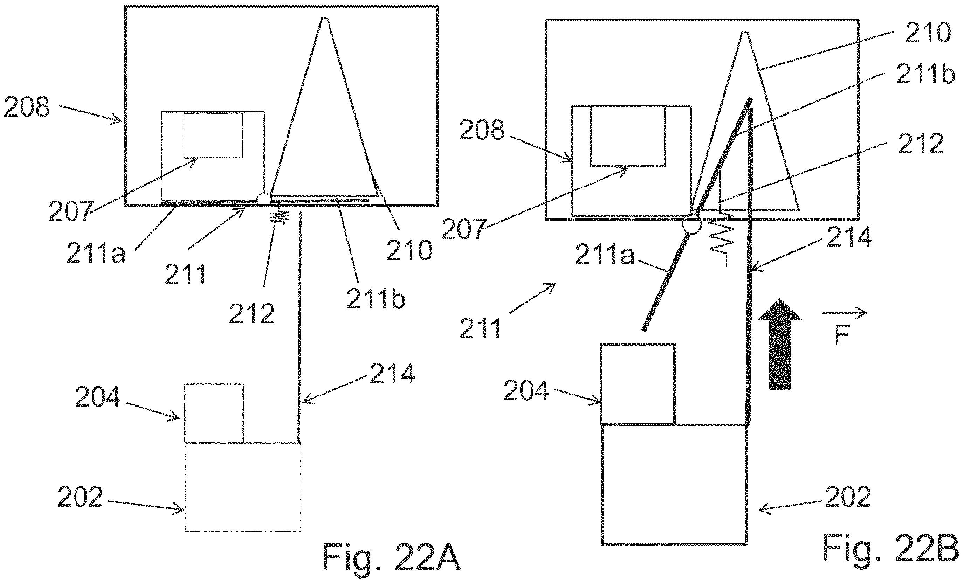

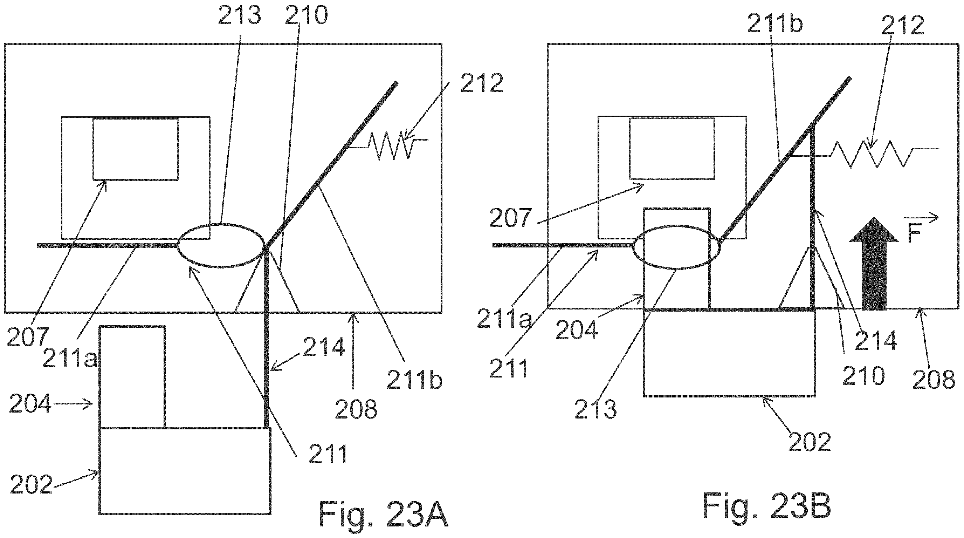

Preferably, the charger plug 202 comprises a third protrusion 214 arranged to applied a force F on a protection lid 211 of the charging receiver 208 to move the protection lid 211 from a closed position (figures 22A and 23A) to an open position of the protection lid 211 (figures 22B and 23B).

This arrangement enables the automatic opening of the protection lid 211 of the charging receiver 208 when the charger plug 202 is moved in the direction of the charging receiver 208.

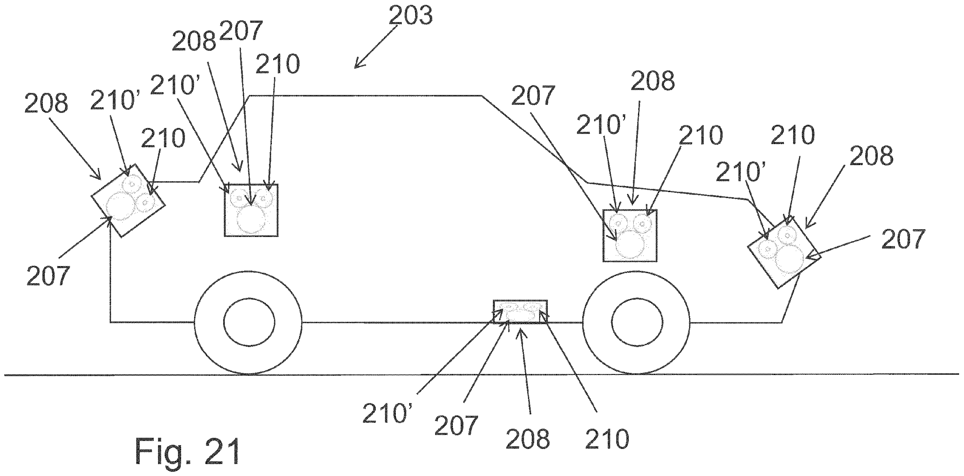

The invention also relates to a charging receiver 208, according to a third embodiment, as shown in figures 19 to 23B, for an electric vehicle 203 comprising a battery. The charging receiver 208 is suitable to be electrically connected to the battery and arranged to be coupled with the charger plug 202 according to the third embodiment, the charging receiver 208 comprising at least a first electric connector 207 arranged to be coupled with the first electric connector 204 of the charger plug 202, the second electric connector 207 comprising at least a first electric contact arranged to be electrically coupled with corresponding first electric contact of the first electric connector 204 of the charger plug 202, the charging receiver 208 comprising at least a first recess 210, 210' arranged to be only mechanically coupled with a first positioning protrusion 209 of the charger plug 202, the first recess 210, 210' having a funnel shape.

This particular funnel shape is provided to facilitate the insertion of the first positioning protrusion 209 and thus to facilitate the alignment of the first electric connector 204 with the second electric connector of the charging receiver 208.

Preferably, the charging receiver 208 comprises the first recess 210 and a second recess 210', the second recess 210' being arranged to be only mechanically coupled with a second positioning protrusion of the charger plug 202, the second recess 210' having a funnel shape.

According to a first preferred specificity, the second electric connector 207 comprises a first electric contact, a second electric contact and a third electric contact, the first electric contact being suitable to be electrically connected to a first AC line electrically connected to the battery, the second electric contact being suitable to be electrically connected to a neutral line electrically connected to the battery, the third electric contact being suitable to be electrically connected to a ground line.

Preferably, the charging receiver 208 according to this first preferred specificity is arranged to be connected to the charger plug 202 according to the first preferred specificity.

According to a particularity of this first preferred specificity, the second electric connector 207 comprises a fourth electric contact and a fifth electric contact, the fourth electric contact being suitable to be electrically connected to a first negative DC line electrically connected to the battery and the fifth electric contact being suitable to be electrically connected to a second positive DC line electrically connected to the battery.

Preferably, the charging receiver 208 according to this particularity of the first preferred specificity is arranged to be connected to the charger plug 202 according to the first preferred specificity or to the third preferred specificity.

According to a second preferred specificity, the second electric connector 207 comprises a first electric contact, a second electric contact, a third electric contact, a fourth electric contact and a fifth electric contact, the first electric contact being suitable to be electrically connected to a first AC line electrically connected to the battery, the second electric contact being suitable to be electrically connected to a second AC line electrically connected to the battery, the third electric contact being suitable to be electrically connected to a third AC line electrically connected to the battery, the fourth electric contact being suitable to be electrically connected to a neutral line electrically connected to the battery, the fifth electric contact being suitable to be electrically connected to a ground line.

Preferably, the charging receiver 208 according to this second preferred specificity is arranged to be connected to the charger plug 202 according to the second preferred specificity.

According to a particularity of this second preferred specificity, the second electric connector 207 comprises a sixth electric contact and an seventh electric contact, the sixth electric contact being suitable to be electrically connected to a first negative DC line electrically connected to the battery and the seventh electric contact being suitable to be electrically connected to a second positive DC line electrically connected to the battery.

Preferably, the charging receiver 208 according to this particularity of the second preferred specificity is arranged to be connected to the charger plug 202 according to the second preferred specificity or to the third preferred specificity.

According to a third preferred specificity, the second electric connector 207 comprises a first electric contact, a second electric contact and a third electric contact, the first electric contact being suitable to be electrically connected to a first negative DC line electrically connected to the battery, the second electric contact being suitable to be electrically connected to a second positive DC line electrically connected to the battery and the third electric contact being suitable to be electrically connected to a ground line.

Preferably, the charging receiver 208 according to this third preferred specificity is arranged to be connected to the charger plug 202 according to the third preferred specificity.

Preferably, the second electric connector 207 comprises a first communication contact and a second communication contact.

Preferably, the second electric connector 207 is a standard connector according to the standard IEC 62196-1/-2/-3.

According to a first possibility, shown in figures 22A and 22B, the charging receiver 208 comprises a protection lid 211 comprising a first part 221a and a second part 211b, the second part 211b being connected with the charging receiver 208 by return means 212, the protection lid 211 being mobile in rotation between a closed position (figure 22A), where the first part 211 a of the protection lid 211 covers at least the second electric connector 207 and an open position (figure 22B), where the first part 211a of the protection lid 211 uncovers at least the second electric connector 207, the return means 212 being arranged to hold the protection lid 211 in the closed position, the protection lid 211 being arranged to move from the closed position to the open position, when a force F is applied on the second part 211b of the protection lid 211.

According to a second possibility shown in figures 23A and 23B, the charging receiver 208 comprises a protection lid 211 comprising a first part 211a and a second part 211b, the second part 211b being connected with the charging receiver 208 by return means 212, the protection lid 211 being mobile in translation between a closed position (figure 23A), where the first part 211a of the protection lid 211 covers at least the second electric connector 207 and, an open position (figure 23B), where an opening 231 of the first part 211a of the protection lid 211 uncovers at least the second electric connector 207, the return means 212 being arranged to hold the protection lid 211 in the closed position, the protection lid 211 being arranged to move from the closed position to the open position when a force F is applied on the second part 211b of the protection lid 211.

The protection lid 211, according to the first and second possibilities, is provided to protect the second electric connector 207 from the outdoor conditions. In addition, this protection lid 211 can be automatically opened, when the charger plug 202 is moved in the direction of the charging receiver 208 and a force F is applied on the second part 211b of the protection lid 211 by the third protrusion 214.

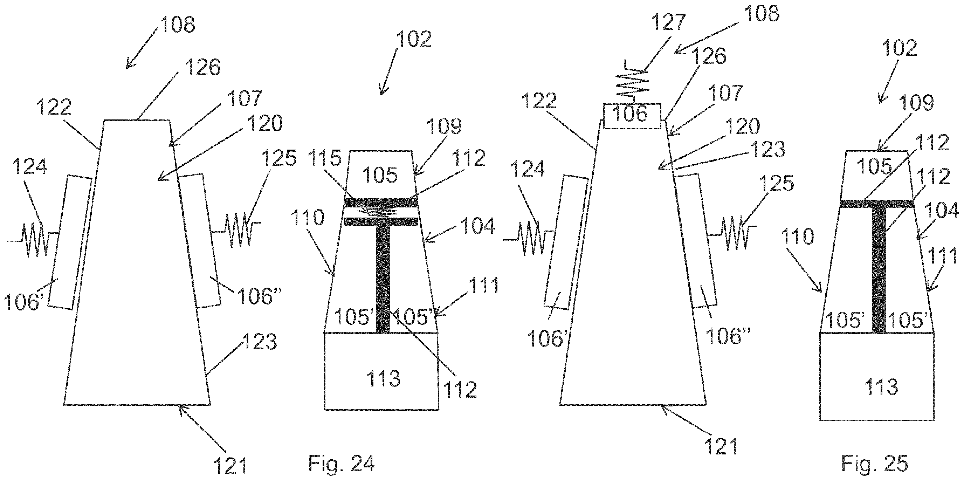

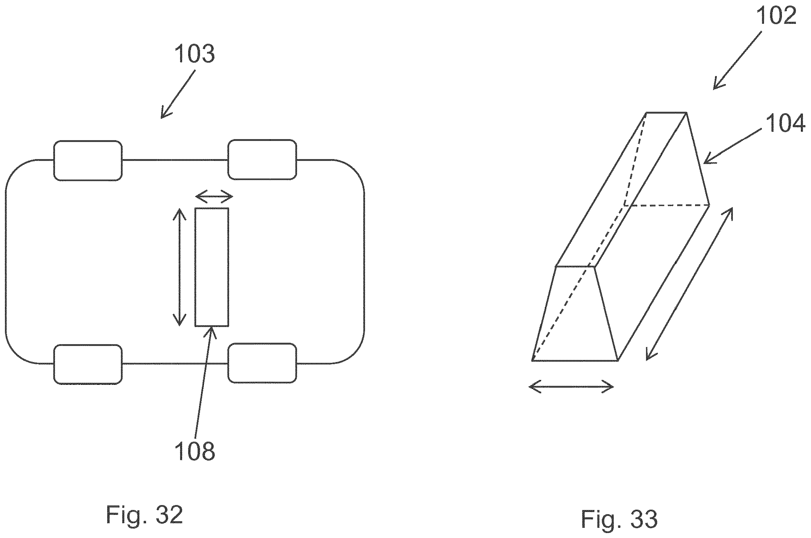

The invention also relates to a charging station, as shown in figures 24 to 33. The charging station comprises a charger plug 102 according to a fourth embodiment for supplying electric energy to an electric vehicle 103. This charger plug 102 comprises a first electric connector 104 comprising a first electric contact 105, a second electric contact 105', a third electric contact 105", the first electric connector 104 being arranged to be coupled with a corresponding second electric connector 107 of a charging receiver 108 according to a fourth embodiment, located underneath the electric vehicle 3, so that the first, second and third electric contacts 105, 105', 105" being electrically connected with corresponding fourth, fifth, sixth electric contacts 106, 106', 106" of the second electric connector 107, the first electric connector 104 having a trapezoidal section and comprising an upper part 109 comprising the first electric contact 105, a first lateral part 110 comprising the second electric contact 105', and a second lateral part 111 comprising the third electric contact 105", the first electric contact 105, the second electric contact 105' and third electric contact 105" being separated and insulated from each other by an insulated core 112.

According to a preferred specificity as shown in figures 25, 28 and 29, the charger plug 102 comprises a support 113 bearing the first electric connector 104, the first electric connector 104 being secured to the support 113.

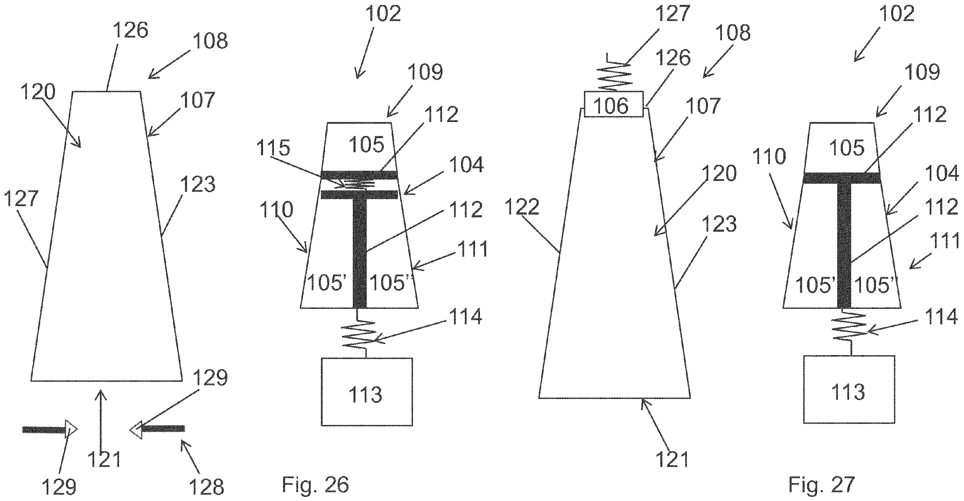

According to another preferred specificity, as shown in figures 26 and 27, the charger plug 102 comprises a support 113 bearing the first electric connector 104, the first electric connector 104 being connected to the support 113 by return means 114.

According to a particularity of these specificities and of the fourth embodiment, as shown in figures 24, 26, 28, 30 and 31, the upper part 109 comprising the first electric contact 105 is connected to the insulated core 112 by return means 115.

This return means 115 are provided to ensure the contact of the first electric contact 105 with the corresponding fourth electric contact 106 of the charging receiver 108, which is not necessarily connected to the upper part 126 by return means 127.

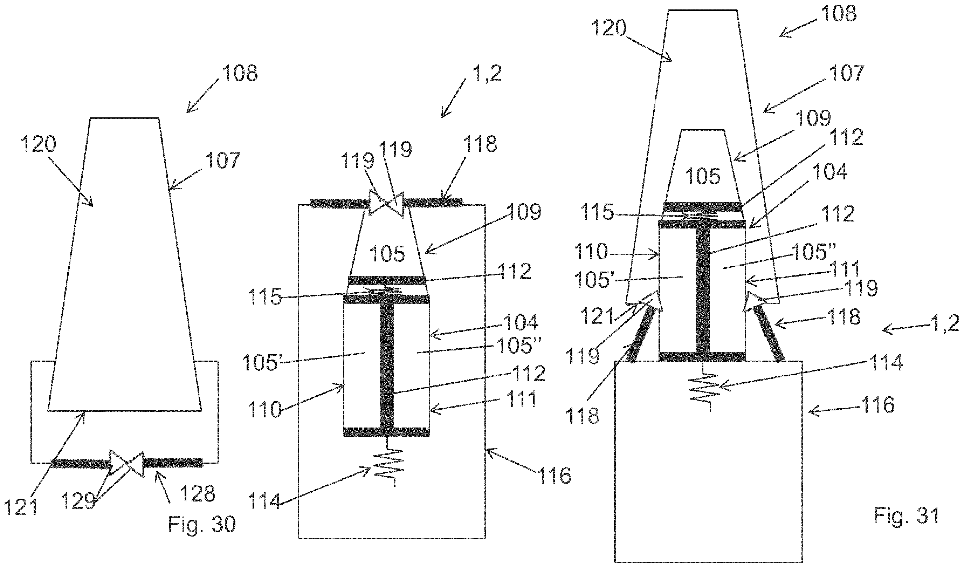

Preferably, as shown in figures 30 and 31, the charging station comprises a protection housing 116 arranged to protect the charger plug 102 and a telescopic arm or a scissor lift connected to the first electric connector 104 movable between a protection position (figure 30), where the first electric connector 104 is enclosed inside the protection housing 116 and an operating position (figure 31), where the first electric connector 104 projects outside the protection housing 116.

Preferably, the protection housing 116 comprises a first protection lid 118 arranged to be movable between a closed position and an open position (figure 31), the first protection lid 118 being arranged to move from the closed position to the open position, when the first electric connector 104 of the charger plug 102 leans against the first protection lid 118, and more particularly when the upper part 119 leans against the first protection lid 118.

This first protection lid 118 is provided to protect the first electric connector 104 from the outdoor conditions. In addition, this first protection lid 118 can be automatically opened, when the charger plug 102 is moved in the direction of the charging receiver 108.

Preferably, the first protection lid 118 comprises first cleaning means 119.

These cleaning means 119 are provided to wipe the first, second and third electric contacts 105, 105', 105" of the first electric connector 104 to clean it from dust and corrosion.

Preferably, the cleaning means 119 consist in rough or sharp-edged material, such as hard plastics, metal grater, or brush like material such as metal brush, hard fiber brush.

The invention relates to a charging receiver 108 according to a fourth embodiment, as shown in figure 24 to 32, for an electric vehicle 103 suitable for being located underneath the electric vehicle 103 and arranged to be coupled with the charger plug 102 according the fourth embodiment of the charging station, as shown in figures 24 to 32. The charging receiver 108 comprises a second electric connector 107 arranged to be coupled with the first electric connector 104 of the charger plug 102, the second electric connector 107 comprising fourth, fifth, sixth electric contacts 106, 106', 106" arranged to be electrically coupled with corresponding first, second, third electric contacts 105, 105', 105" of the first electric connector 104 of the charger plug 102, the second electric connector 107 comprising a recess 120 where the fourth, fifth, sixth electric contacts 106, 106', 106" are located, the recess 120 comprising an reception opening 121 to allow the insertion of the first electric connector 104 of the charger plug 102.

According to a first possibility, the recess 120 has a trapezoidal section, as shown in figures 24 to 27, 30, 31 and 33.

Preferably, as shown in figures 24 and 25, the recess 120 has a trapezoidal section, comprising a first lateral part 122 comprising the fifth electric contact 106' which is connected to the first lateral part 122 by return means 124 and comprising a second lateral part 123 comprising the sixth electric contact 106" which is connected to the second lateral part 123 by return means 125.

The return means 124, 125 are provided to ensure the contact respectively of the fifth electric contact 106' with the corresponding second electric contact 105' of the charging plug 102 and of the sixth electric contact 106" with the corresponding third electric contact 105" of the charging plug 102.

Preferably, as shown in figures 25, 26 and 27, the recess 120 has a trapezoidal section comprising an upper part 126 comprising the fourth electric contact 106 which is connected to the upper part 126 by return means 127.

The return means 127 are provided to ensure the contact of the fourth electric contact 106 with the corresponding first electric contact 105 of the charging plug 102, which is not necessarily connected to the insulated core 112 by return means 115.

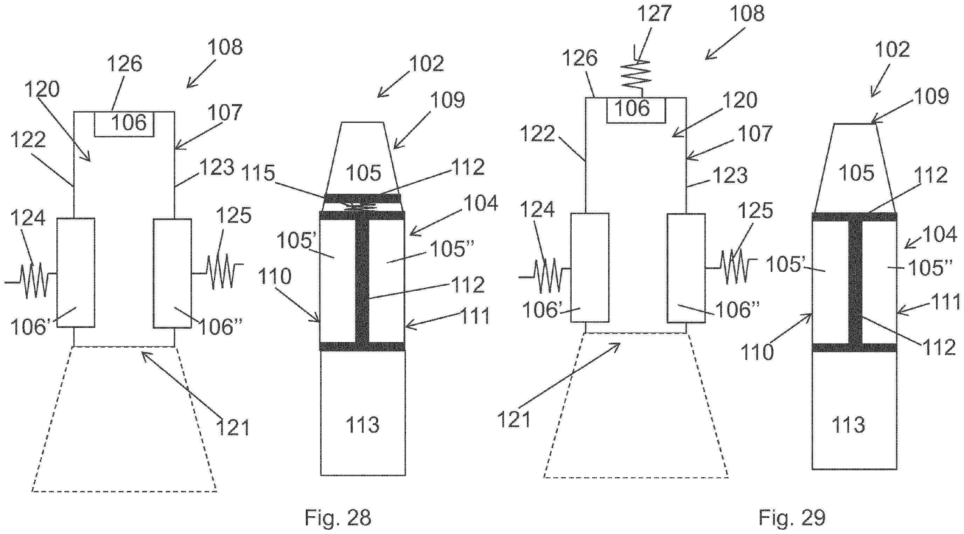

According to a second possibility the recess 120 has a rectangular section, as shown in figures 28 and 29.

Preferably, as shown in figures 28 and 29, the recess 120 has a rectangular section, comprising a first lateral part 122 comprising the fifth electric contact 106' which is connected to the first lateral part 122 by return means 124 and comprising a second lateral part 123 comprising the sixth electric contact 106" which is connected to the second lateral part 123 by return means 125.

The return means 124, 125 are provided to ensure the contact respectively of the fifth electric contact 106' with the corresponding second electric contact 105' of the charging plug 102 and of the sixth electric contact 106" with the corresponding third electric contact 105" of the charging plug 102.

Preferably as shown in figures 28 and 29, the recess 120 has a rectangular section comprising an upper part 126 comprising the fourth electric contact 106 which is connected to the upper part 126 by return means 127.

The return means 127 are provided to ensure the contact of the fourth electric contact 106 with the corresponding first electric contact 105 of the charging plug 102, which is not necessarily connected to the insulated core 112 by return means 115.

Preferably, according to the invention, the charging receiver 108 comprises a second protection lid 128 movable from a closed position, where the second protection lid 128 covers the reception opening 121 to protect the second electric connector 107 (figure 30), and an opened position where the second protection lid 128 uncovers the reception opening 121, the second protection lid 128 being connected to the recess 120 by return means so that the second protection lid 128 is arranged to be move from the closed position to the closed position when the first electric connector 104 of the charger plug 102 leans against the second protection lid 128.

This second protection lid 128 is provided to protect the second electric connector 107 from the outdoor conditions. In addition, this second protection lid 128 can be automatically opened, when the charger plug 102 is moved in the direction of the charging receiver 108.

Preferably, the second protection lid 128 or the reception opening 121 comprises second cleaning means 129.

These second cleaning means 129 are provided to wipe the first, second and third electric contacts 105, 105', 105" of the first electric connector 104 to clean it from dust and corrosion.

Preferably, the cleaning means 129 consist in rough or sharp-edged material, such as hard plastics, metal grater, or brush like material such as metal brush, hard fiber brush.

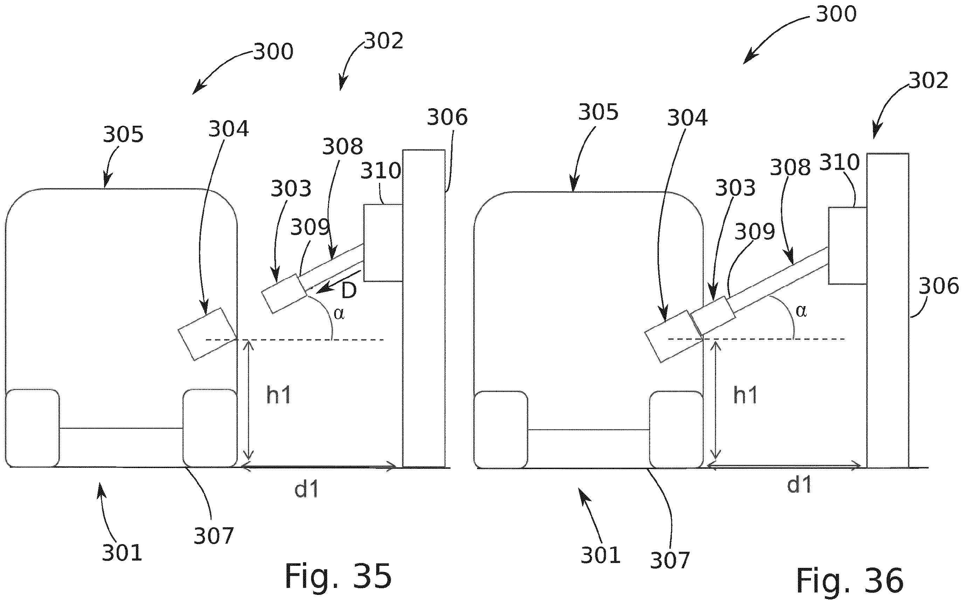

Another object of the invention relates to a charging spot 300, as shown in figures 35 to 38. The charging spot 300 comprises at least one parking spot 301 and a charging station 302, which comprises a charger plug 303 for at least supplying electric energy to a charging receiver 304 of an electric vehicle 305. The charging station 302 comprises a base 306 extending upwardly relative to the ground 307 of the parking spot 301 and a linear actuator 308 comprising a first end 309 mounted on said base 306 and a second end 310, where the charger plug 303 is mounted, said linear actuator 308 being inclined with respect to the base 306 and forming an angle α with respect to the ground 307, which is equal to the inclination angle of the charging receiver 304 with respect to the ground 307.

Preferably, the charging station 302 comprises a secondary control unit (not shown) comprising a secondary communication (not shown) module to communicate with a primary communication module (not shown) of the primary control unit (not shown) of the electric vehicle 305.

These primary and secondary communication modules are provided to exchange data between the charging spot 300 and the electric vehicle 305.

Preferably, the primary communication module and secondary communication module could be any kind of wireless communication means, for instance: a Bluetooth unit or a RFID unit or a NFC unit or a Wi-Fi unit.

Preferably, the parking spot 301 comprises at least one reference element (not shown).

Preferably, the reference element could be located on the base 306 on which the charger plug 303 is mounted.

Preferably, the reference element could be an active distance sensor or a reflector panel/area.

This reference element is provided to help the primary control unit of the electric vehicle 305 to measure a distance d1, d2 between the charging receiver 304 and the base 306.

Preferably, the linear actuator 308 consists of a telescopic arm.

This charging spot 300 is provided to enable the implementation of a method according to another object according to the invention, described hereinafter.

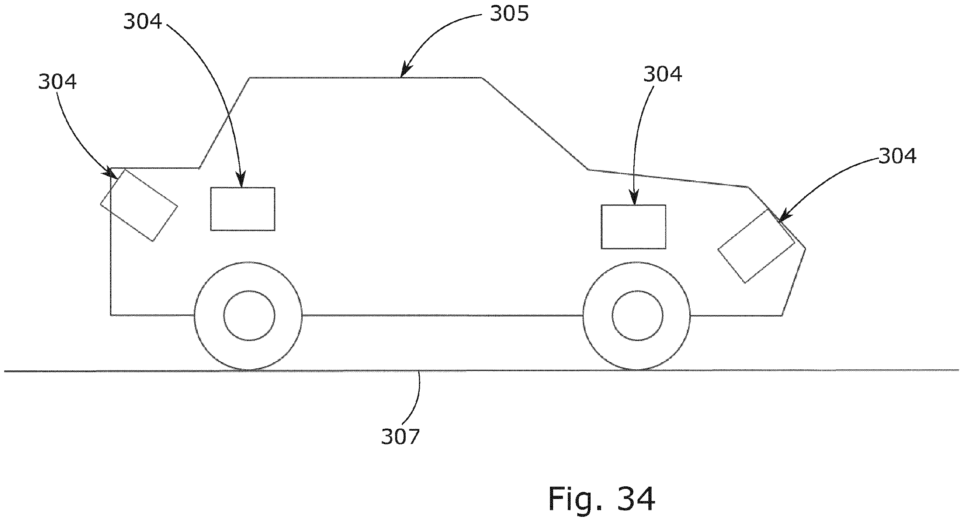

Another object according to the invention relates to a method for positioning an electric vehicle 305, as shown in figure 34, on a charging spot 300, as described above and as shown in figures 35 to 38. The electric vehicle 305 comprises at least one sensor (not shown) and a primary control unit (not shown) comprising a primary communication module (not shown). The charging spot 300 comprises at least one parking spot 301 and a charging station 302, which comprises a charger plug 303 for at least supplying electric energy to a charging receiver 304 of an electric vehicle 305. The charging station 302 comprises a base 306 extending upwardly relative to the ground 307 of the parking spot 301 and a linear actuator 308 comprising a first end 309 mounted on said base 306 and a second end 310, where the charger plug is mounted, said linear actuator 308 being inclined with respect to the base 306 and forming an angle α with respect to the ground 307, which is equal to the inclination angle of the charging receiver 304 with respect to the ground 307, the charging station 302 comprising a secondary control unit comprising a secondary communication module to communicate with the primary communication module of the primary control unit of the electric vehicle 305. The charger plug 303 is able to cooperate with the charging receiver 304 of the electric vehicle 305.

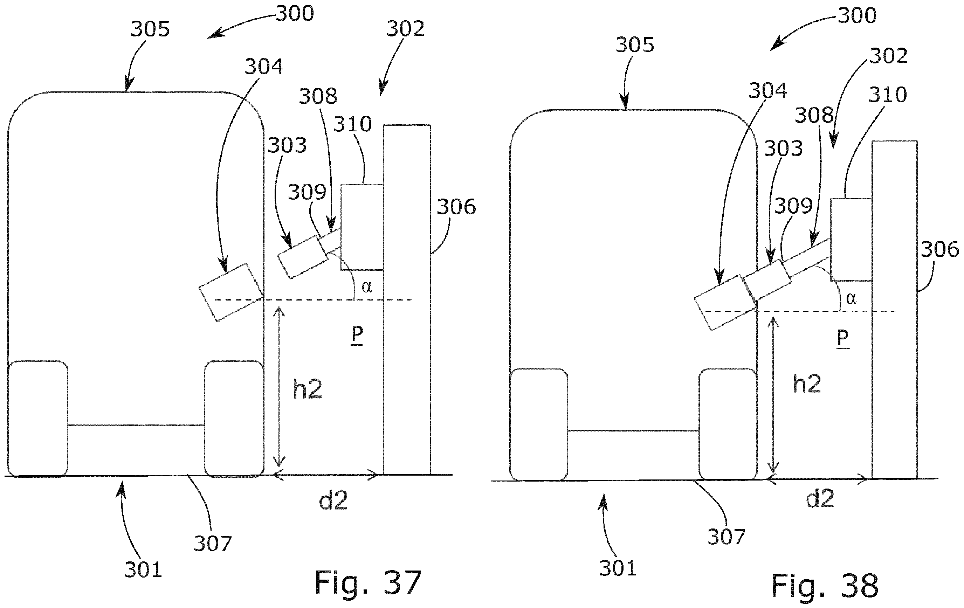

According to the invention the method comprises the steps of:
moving the electric vehicle 305 to the parking spot 301 to reach a parking position,
determining an alignment position of the electric vehicle 305, where the charging receiver 304 and the charger plug 303 align, by determining at least a reference distance d1, d2 between the charging receiver 304 and the base 306, knowing the height h1, h2 of the charging receiver 304, the height of the second end 310 and the angle α,
moving the electric vehicle 305 on the parking spot 301 from the parking position to the alignment position by means of the at least one sensor of the electric vehicle 305 which measures the actual distance d1, d2 between the charging receiver 304 and the base 306, and by means of the primary control unit comparing the actual distance d1, d2 and the predetermined reference distance d1, d2, for parking the electric vehicle 305 at the predetermined reference distance d1, d2 (figures 35 and 37).

Depending on the model of electric vehicle 305, the height h1, h2 of the charging receiver 304 may be different. For instance, figure 35 and 36 show an electric vehicle 305 with a charging receiver 304 having a height h1, which is smaller than the height h2 of the charging receiver 304 of the electric vehicle 305, shown in figures 37 and 38. In this case, it is known in the art to use a robot to align the charger plug of a charging station with the charging receiver 304 of the electric vehicle 305. According to the invention, the angle α of the charging receiver 304 is standardized, i.e. is independent from the height h1, h2 of the charging receiver 304. Thus, when the height h1, h2 of the charging receiver 304 is different from one electric vehicle 305 to another, one just need to park the electric vehicle 305 at a distance d1, d2, which corresponds to the reference distance d1, d2, which has been previously determined, for aligning the charging receiver 304 and the charger plug 303. Advantageously, no expensive and complex robot is required according to the invention.

Preferably, the primary control unit of the electric vehicle 305 is electrically connected to at least one sensor of the electric vehicle 305.

Preferably, the primary control unit is also suitable and provided to control the at least one sensor of the electric vehicle 305 and to collect the data of the sensor, which are representative of the actual distance d1, d2.

Preferably, the primary control unit is also suitable and provided to automatically move the electric vehicle 305.

According to a first embodiment, when determining the alignment position, the primary control unit of the electric vehicle 305 determines the reference distance d1, d2 between the charging receiver 304 and the base 306, knowing the height h1, h2 of the charging receiver 304, the height of the second end 310 and the angle α.

According to a particularity of this first embodiment, before determining the alignment position, the secondary communication module sends data relative to the height of the second end 310 to the primary communication module.

According to a second embodiment, when determining the alignment position, the secondary control unit of the electric vehicle determines the reference distance d1, d2 between the charging receiver 304 and the base 306, knowing the height h1, h2 of charging receiver 304, the height of the second end 310 and the angle α.

According to particularity of this second embodiment before determining the alignment position, the primary communication module sends data relative to the height h1, h2 to the secondary communication module, and after determining the alignment position, the secondary communication module sends data relative to the reference distance d1, d2 to the primary communication module.

Preferably, when moving the electric vehicle 308 to the alignment position, the electric vehicle 308 measures the actual distance d1, d2 between a reference element located on the base 306.

Preferably, the method further comprises the step of moving the linear actuator 308 in translation in the direction D of the charging receiver 304, when the electric vehicle 305 is in the alignment position (figures 36 and 38).

Preferably, the method further comprises the step of sending a signal from the primary control unit to the secondary control unit, when the electric vehicle 305 is in the alignment position, to trigger the translation of the linear actuator 308.

Preferably, the signal consists of an electromagnetic signal provided to communicate wirelessly.

Of course, the invention is not limited to the embodiments described and represented in the accompanying drawings. Modifications remain possible, particularly from the viewpoint of the composition of the various elements or by substitution of technical equivalents without thereby exceeding the field of protection of the invention.

## Claims

1. Charger plug (2) for supplying electric energy to an electric vehicle (3), the charger plug (2) comprising at least a first electric connector (4) comprising at least one first electric contact (5), the first electric connector (4) being arranged to be coupled with a corresponding second electric connector (7) of a charging receiver (8) located on the bottom (3') of the electric vehicle (3) so that the at least one first electric contact (5) being electrically connected with at least one second electric contact (6) of the second electric connector (7), a support (17) comprising guiding means (10, 12) comprising a reception area (14) arranged to surround at least partially the charging receiver (8) and arranged to align the first electric connector (4) and the second electric connector (7), when moving the charger plug (2) in the direction of the charging receiver (8) or conversely
charger plug (2) **characterized in that** the support (17) comprising a bottom face (17a) on which the first electric connector (4) is mounted and an upper face (17b) arranged to slide on the bottom (3') of the electric vehicle (3).

2. Charger plug according to claim 1, wherein the guiding means comprises a first member (10) projecting from the support (17) on a first lateral side (11) of the first electric connector (4) and a second member (12) projecting from the support (17) on a second lateral side (13) of the first electric connector (4) respectively delimiting a first portion (14a) and a second portion (14b) of the reception area (14), the first member (10) and the second member (12) being positioned at a predetermined distance (D) from one to another and being separated from one to another by a base portion (14c) of the reception area (14).

3. Charger plug according to claim 2, wherein the reception area (14) has a U-shaped delimited by the first portion (14a), the second portion (14b) and the base portion (14c).

4. Charger plug according to one of claims 2 to 3, wherein the charger plug (2) comprises means (15; 31, 32) for opening a protection lid (25) of the charging receiver (8) arranged to cooperate with corresponding means (26; 33, 35) for opening the protection lid (25) of the charging receiver (8).

5. Charger plug according to claim 4, wherein the means for opening the protection lid (25) consist of a protrusion (15) projecting from the reception area (14) of the support (17), the protrusion (15) being arranged to cooperate with the corresponding means for opening the protection lid (25) of the charging receiver (8) consisting of a guiding slot (26) of the protection lid (25) comprising an inclined wall (27).

6. Charger plug according to claim 4, wherein the means for opening the protection lid (25) comprise a first inclined guide rail (31) projecting from the bottom face (17a) of the support (17) and surrounding the first lateral side (11) of the first electric connector (4), and a second inclined guide rail (32) projecting from the bottom face (17a) of the support (17) and surrounding the second lateral side (13) of the first electric connector (4), the first inclined guide rail (31) and the second inclined guide rail (32) being arranged to cooperate respectively with the corresponding means for opening the protection lid (25) of the charging receiver (8) consisting of a first protrusion (33) projecting from a first lateral wall (34) of the protection lid (25) of the charging receiver (8) and a second protrusion (35) projecting from a second lateral wall (36) of the protection lid (25).

7. Charger plug according to claims 2 and 6 or 3 and 6, wherein the first inclined guide rail (31) protrudes perpendicularly to the bottom face (17a) along the first portion (14a) of the reception area (14) and the second inclined guide rail (32) protrudes perpendicularly to the bottom face (17a) along the second portion (14b) of the reception area (14).

8. Charger plug according to one of claims 1 to 7, wherein the support (17) has a planar shape comprising the bottom face (17a) on which the first electric connector (4) is mounted and the upper face (17b) arranged to slide on the bottom (3') of the electric vehicle (3).

9. Charger plug according to one of claims 1 to 8, wherein the support (17) comprises at least a guiding wheel (18, 19).

10. Charger plug according to claim 9, wherein a first guiding wheel (18) and a second guiding wheel (19) project from the support (17) through the bottom face (17a) and the upper face (17b).

11. Charger plug according to one of claims 1 to 10, wherein the upper face (17b) of the support (17) comprises a plurality of grooves (37), each groove (37) extending on a longitudinal direction of the support (17) and leading to the reception area (14) by an open end (38), each groove (37) being arranged to receive a corresponding pin protruding from the bottom (3') of the electric vehicle (3).

12. Charger plug according to claim 11 wherein the open end (38) has a funnel shape.

13. Charger plug according to one of claims 1 to 12, wherein the charger plug (2) comprises a circuit breaker electrically connected to the at least first electric connector (4).

14. Charging station comprising at least one arm (20, 20') connected to a charger plug (2) by connection means (21), and comprising at least one actuator (22) to move the at least one arm (20, 20) **characterized in that** the charging station comprises a charger plug (2) according to one of claims 1 to 13.

15. Charging station according to claim 14, wherein the at least one actuator (22) is arranged to move the at least one arm (20, 20) in rotation and/or in translation.

16. Charging station according to one of claims 14 to 15, wherein the charging station (1) comprises a first protection housing (23) arranged to protect the charger plug (2) and a second protection housing (24) arranged to protect the actuator (22), the first protection housing (23) and the second protection housing (24) being aligned and being separated from one to another by a distance D1.

17. Charging station according to one of claims 14 to 15, wherein the charging station (1) comprises a single protection housing arranged to protect the charger plug (2), the arm (20, 20') and the actuator (22).

18. Charging receiver (8) for an electric vehicle (3) suitable for being mounted on the bottom (3') of the electric vehicle (3) and arranged to be coupled with the charger plug (2) according to one of claims 1 to 13, the charging receiver (8) comprising at least one second electric connector (7) arranged to be coupled with the first electric connector (4) of the charger plug (2), the second electric connector (7) comprising at least one second electric contact (6) arranged to be electrically coupled with at least one first electric contact (5) of the first electric connector (4) of the charger plug (2), the charging receiver (8) comprising a rotatable protection lid (25) movable in rotation from a first position (P1), where the protection lid (25) covers the second electric connector (7) to protect the second electric contact (6), and a second position (P2), where the protection lid (25) uncovers the second electric connector (7) to enable the electric connection between the second electric contact (6) and the first electric contact (5),
charging receiver (8) **characterized in that** the protection lid (25) comprises means (26; 33, 35) for opening the protection lid (25) arranged so that the protection lid (25) tilts from the first position (P1) to the second position (P2) when it cooperates with corresponding means (15; 31, 32) for opening the protection lid (25) of the charger plug (2).

19. Charging receiver according to claim 18, wherein the means for opening the protection lid (25) consist of a guiding slot (26) of the protection lid (25) comprising an inclined wall (27), arranged to be coupled with the corresponding means for opening the protection lid (25) of the charger plug (2) consisting of a protrusion (15) projecting from a reception area (14) of the charger plug (2), the guiding slot (26) being arranged so that the protection lid (25) tilts from the first position (P1) to the second position (P2) when the protrusion (15) engaged with the guiding slot (26).

20. Charging receiver according to claim 19, wherein a second contact wall (9) of the second electric connector (7) comprises an interlocking area (26') aligned with the guiding slot (26) of the protection lid (25), arranged to be coupled with the protrusion (15) projecting from the reception area (14) of the charger plug (2).

21. Charging receiver according to claim 18, wherein the means for opening the protection lid (25) comprise a first protrusion (33) projecting from a first lateral wall (34) of the protection lid (25) and a second protrusion (35) projecting from a second lateral wall (36) of the protection lid (25), the first protrusion (33) and the second protrusion (35) being arranged to cooperate with the corresponding means for opening the protection lid (25) of the charger plug (2) consisting of a first inclined guide rail (31) and a second inclined guide rail (32) so that the protection lid (25) tilts from the first position (P1) to the second position (P2) when the first inclined guide rail (31) leans against and slides on the first protrusion (33) and the second inclined guide rail (32) leans against and slides on the second protrusion (35).

22. Charging receiver according to one of claims 18 to 21, wherein the protection lid (25) is connected with the second electric connector (7) by return means to enable the return of the protection lid (25) from the second position (P2) to the first position (P1) when the protrusion (15) is disengaged from the guiding slot (26) or when the first and second inclined guide rails (31, 32) are respectively released from the first and second protrusions (33, 35).

23. Charging receiver according to one of claims 18 to 22, wherein the second female electric connector (7) comprises a plurality of recesses (28), each recess (28) comprises one of the second electric contact (6), each recess (28) comprises a first opening (29) located on the second contact wall (9) for the engagement of the first electric contact (5) of the first male electric connector (4) and a second opening (30).

24. Method for connecting a charging receiver (8) of an electric vehicle (3) and a charger plug (2) of a charging station (1), the charging station (1) being located on the ground (39) and being suitable to be located underneath the bottom (3') of the electric vehicle (3), the charging station (1), arranged according to one of claims 14 - 17, comprising the charger plug (2), arranged according to one of claims 1 to 13, which comprises a first electric connector (4), at least one arm (20, 20') connected to the charger plug (2) by connection means (21) and at least an actuator (22) to move the at least one arm (20, 20'), the charging receiver (8), arranged according to one of claims 18 - 23, being mounted on the bottom (3) of the electric vehicle (3) and comprising a second electric connector (7), the charger plug (2) comprising guiding means (10, 12) comprising a reception area (14) arranged to surround at least partially the charging receiver (8) and arranged to align the first electric connector (4) and the second electric connector (7), when moving the charger plug (2) in the direction of the charging receiver (8) or conversely, method comprising the steps of :
when the charger plug (2) leans against the bottom (3) of the electric vehicle (3) in a sliding position (SP):
A) moving the electric vehicle (3) in translation along a parallel direction relatively to the charger plug (2), to move the charging receiver (8) in the direction of the charger plug (2) so that the charger plug (2) slides on the bottom (3') of the electric vehicle (3), or
B) moving the arm (20, 20') by means of the actuator (22) in translation along the bottom (3) of the electric vehicle (3) to move the charger plug (2) in the direction of the charging receiver (8) so that the charger plug (2) slides on the bottom (3') of the electric vehicle (3),
when moving the electric vehicle (3) or the arm (20, 20') according to the step A or B:
C) aligning the first electric connector (4) with the second electric connector (7) by means of the guiding means (10, 12) of the charger plug (2), then
D) tilting the protection lid (25) movable in rotation from a first position (P1) where the protection lid (25) covers the second electric connector (7) to protect the second electric contact (6) to a second position (P2) where the protection lid (25) uncovers the second electric connector (7) by means of corresponding means (15, 33, 35, 26, 31, 32) for opening the protection lid (25) of the charging receiver (8) and of the charger plug (2), then
E) mechanically and electrically connecting the first electric connector (4) and the second electric connector (7).

25. Method according to claim 24, wherein when the charger plug (2) and the arm (20, 20') are located inside a single protection housing in a protection position (PP), before the steps A or B to E:
G) moving the arm (20, 20') by means of the actuator (22) in translation along a vertical direction to move the charger plug (2) in the direction of the bottom (3') of the electric vehicle (3) in the sliding position (SP), or
H) moving the arm (20, 20') by means of the actuator (22) in rotation to move the charger plug (2) in the direction of the bottom (3') of the electric vehicle (3) in the sliding position (SP).

26. Method according to claim 24, wherein when the charger plug (2) is located inside a first protection housing (23) in a protection position (PP), and the arm (20, 20') and the actuator (22) are located inside a second protection housing (24), before the steps A or B to E:
I) moving the arm (20, 20') by means of the actuator (22) in translation along a horizontal direction to move the charger plug (2) outside of the first protection housing (23),
K) moving the arm (20, 20') by means of the actuator (22) in translation along a vertical direction to move the charger plug (2) in the direction of the bottom (3') of the electric vehicle (3) in the sliding position (SP), or
L) moving the arm (20, 20') by means of the actuator (22) in rotation to move the charger plug (2) in the direction of the bottom (3') of the electric vehicle (3) in the sliding position (SP).

## Patentansprüche

1. Ladestecker (2) zum Zuführen elektrischer Energie zu einem Elektrofahrzeug (3), wobei der Ladestecker (2) mindestens einen ersten elektrischen Verbinder (4), der mindestens einen ersten elektrischen Kontakt (5) umfasst, wobei der erste elektrische Verbinder (4) ausgestaltet ist, mit einem entsprechenden zweiten elektrischen Verbinder (7) eines Ladeempfängers (8) gekoppelt zu werden, der an der Unterseite (3') des Elektrofahrzeugs (3) derart angeordnet ist, dass der mindestens eine erste elektrische Kontakt (5) elektrisch mit mindestens einem zweiten elektrischen Kontakt (6) des zweiten elektrischen Verbinders (7) verbunden ist, eine Halterung (17), die ein Führungsmittel (10, 12) umfasst, umfassend einen Aufnahmebereich (14), der angeordnet ist, den Ladeempfänger (8) zumindest teilweise zu umgeben, und angeordnet ist, den ersten elektrischen Verbinder (4) und den zweiten elektrischen Verbinder (7) auszurichten, wenn der Ladestecker (2) in die Richtung des Ladeempfängers (8) oder umgekehrt bewegt wird, umfasst
wobei der Ladestecker (2) **dadurch gekennzeichnet ist, dass** die Halterung (17) eine untere Fläche (17a), an der der erste elektrische Verbinder (4) angebracht ist, und eine obere Fläche (17b), die ausgestaltet ist, an der Unterseite (3') des Elektrofahrzeugs (3) zu gleiten, umfasst.

2. Ladestecker nach Anspruch 1, wobei das Führungsmittel ein erstes Element (10), das von der Halterung (17) an einer ersten lateralen Seite (11) des ersten elektrischen Verbinders (4) hervorsteht, und ein zweites Element (12), das von der Halterung (17) an einer zweiten lateralen Seite (13) des ersten elektrischen Verbinders (4) hervorsteht, umfasst, die jeweils einen ersten Abschnitt (14a) und einen zweiten Abschnitt (14b) des Aufnahmebereichs (14) begrenzen, wobei das erste Element (10) und das zweite Element (12) in einem vorbestimmten Abstand (D) voneinander positioniert sind und durch einen Basisabschnitt (14c) des Aufnahmebereichs (14) voneinander getrennt sind.

3. Ladestecker nach Anspruch 2, wobei der Aufnahmebereich (14) eine U-Form aufweist, die durch den ersten Abschnitt (14a), den zweiten Abschnitt (14b) und den Basisabschnitt (14c) begrenzt ist.

4. Ladestecker nach einem der Ansprüche 2 bis 3, wobei der Ladestecker (2) Mittel (15; 31, 32) zum Öffnen eines Schutzdeckels (25) des Ladeempfängers (8) umfasst, die ausgestaltet sind, mit entsprechenden Mitteln (26; 33, 35) zum Öffnen des Schutzdeckels (25) des Ladeempfängers (8) zusammenwirken.

5. Ladestecker nach Anspruch 4, wobei die Mittel zum Öffnen des Schutzdeckels (25) aus einem Vorsprung (15) bestehen, der von dem Aufnahmebereich (14) der Halterung (17) hervorsteht, wobei der Vorsprung (15) ausgestaltet ist, mit den entsprechenden Mitteln zum Öffnen des Schutzdeckels (25) des Ladeempfängers (8) zusammenzuwirken, die aus einem Führungsschlitz (26) des Schutzdeckels (25) bestehen, der eine geneigte Wand (27) umfasst.

6. Ladestecker nach Anspruch 4, wobei die Mittel zum Öffnen des Schutzdeckels (25) eine erste geneigte Führungsschiene (31), die von der unteren Fläche (17a) der Halterung (17) hervorsteht und die erste laterale Seite (11) des ersten elektrischen Verbinders (4) umgibt, und eine zweite geneigte Führungsschiene (32), die von der unteren Fläche (17a) der Halterung (17) hervorsteht und die zweite laterale Seite (13) des ersten elektrischen Verbinders (4) umgibt, umfassen, wobei die erste geneigte Führungsschiene (31) und die zweite geneigte Führungsschiene (32) ausgestaltet sind, jeweils mit den entsprechenden Mitteln zum Öffnen des Schutzdeckels (25) des Ladeempfängers (8) zusammenwirken, die aus einem ersten Vorsprung (33), der von einer ersten lateralen Wand (34) des Schutzdeckels (25) des Ladeempfängers (8) hervorsteht, und einem zweiten Vorsprung (35), der von einer zweiten lateralen Wand (36) des Schutzdeckels (25) hervorsteht, bestehen.

7. Ladestecker nach Ansprüchen 2 und 6 oder 3 und 6, wobei die erste geneigte Führungsschiene (31) senkrecht zu der unteren Fläche (17a) entlang des ersten Abschnitts (14a) des Aufnahmebereichs (14) hervorsteht und die zweite geneigte Führungsschiene (32) senkrecht zu der unteren Fläche (17a) entlang des zweiten Abschnitts (14b) des Aufnahmebereichs (14) hervorsteht.

8. Ladestecker nach einem der Ansprüche 1 bis 7, wobei die Halterung (17) eine planare Form aufweist, die die untere Fläche (17a), an der der erste elektrische Verbinder (4) angebracht ist, und die obere Fläche (17b), die ausgestaltet ist, an der Unterseite (3') des Elektrofahrzeugs (3) zu gleiten, umfasst.

9. Ladestecker nach einem der Ansprüche 1 bis 8, wobei die Halterung (17) mindestens ein Führungsrad (18, 19) umfasst.

10. Ladestecker nach Anspruch 9, wobei ein erstes Führungsrad (18) und ein zweites Führungsrad (19) von der Halterung (17) durch die untere Fläche (17a) und die obere Fläche (17b) hervorstehen.

11. Ladestecker nach einem der Ansprüche 1 bis 10, wobei die obere Fläche (17b) der Halterung (17) eine Mehrzahl von Nuten (37) umfasst, wobei sich jede Nut (37) in einer Längsrichtung der Halterung (17) erstreckt und zu dem Aufnahmebereich (14) durch ein offenes Ende (38) führt, wobei jede Nut (37) ausgestaltet ist, einen entsprechenden Stift aufzunehmen, der von der Unterseite (3') des Elektrofahrzeugs (3) hervorsteht.

12. Ladestecker nach Anspruch 11, wobei das offene Ende (38) eine Trichterform aufweist.

13. Ladestecker nach einem der Ansprüche 1 bis 12, wobei der Ladestecker (2) einen Stromkreisunterbrecher umfasst, der mit dem mindestens ersten elektrischen Verbinder (4) elektrisch verbunden ist.

14. Ladestation, umfassend mindestens einen Arm (20, 20'), der durch Verbindungsmittel (21) mit einem Ladestecker (2) verbunden ist, und umfassend mindestens einen Aktor (22) zum Bewegen des mindestens einen Arms (20, 20'), **dadurch gekennzeichnet, dass** die Ladestation einen Ladestecker (2) nach einem der Ansprüche 1 bis 13 umfasst.

15. Ladestation nach Anspruch 14, wobei der mindestens eine Aktor (22) ausgestaltet ist, den mindestens einen Arm (20, 20') in Rotation und/oder in Translation zu bewegen.

16. Ladestation nach einem der Ansprüche 14 bis 15, wobei die Ladestation (1) ein erstes Schutzgehäuse (23), das ausgestaltet ist, den Ladestecker (2) zu schützen, und ein zweites Schutzgehäuse (24), das ausgestaltet ist, den Aktor (22) zu schützen, umfasst, wobei das erste Schutzgehäuse (23) und das zweite Schutzgehäuse (24) ausgerichtet sind und durch einen Abstand D1 voneinander getrennt sind.

17. Ladestation nach einem der Ansprüche 14 bis 15, wobei die Ladestation (1) ein einzelnes Schutzgehäuse umfasst, das ausgestaltet ist, den Ladestecker (2), den Arm (20, 20') und den Aktor (22) zu schützen.

18. Ladeempfänger (8) für ein Elektrofahrzeug (3), der geeignet ist, an der Unterseite (3') des Elektrofahrzeugs (3) angebracht zu sein und ausgestaltet ist, mit dem Ladestecker (2) nach einem der Ansprüche 1 bis 13 gekoppelt zu werden, wobei der Ladeempfänger (8) mindestens einen zweiten elektrischen Verbinder (7) umfasst, der ausgestaltet ist, mit dem ersten elektrischen Verbinder (4) des Ladesteckers (2) gekoppelt zu werden, wobei der zweite elektrische Verbinder (7) mindestens einen zweiten elektrischen Kontakt (6) umfasst, der ausgestaltet ist, mit mindestens einem ersten elektrischen Kontakt (5) des ersten elektrischen Verbinders (4) des Ladesteckers (2) gekoppelt zu werden, wobei der Ladeempfänger (8) einen rotierbaren Schutzdeckel (25) umfasst, der in Rotation von einer ersten Position (P1), in der der Schutzdeckel (25) den zweiten elektrischen Verbinder (7) zum Schützen des zweiten elektrischen Kontakts (6) bedeckt, und einer zweiten Position (P2), in der der Schutzdeckel (25) den zweiten elektrischen Verbinder (7) freilegt, um die elektrische Verbindung zwischen dem zweiten elektrischen Kontakt (6) und dem ersten elektrischen Kontakt (5) zu ermöglichen, bewegbar ist,
wobei der Ladeempfänger (8) **dadurch gekennzeichnet ist, dass** der Schutzdeckel (25) Mittel (26; 33, 35) zum Öffnen des Schutzdeckels (25) umfasst, die derart ausgestaltet sind, dass der Schutzdeckel (25) von der ersten Position (P1) zu der zweiten Position (P2) schwenkt, wenn er mit entsprechenden Mitteln (15; 31, 32) zum Öffnen des Schutzdeckels (25) des Ladesteckers (2) zusammenwirkt.

19. Ladeempfänger nach Anspruch 18, wobei die Mittel zum Öffnen des Schutzdeckels (25) aus einem Führungsschlitz (26) des Schutzdeckels (25) bestehen, der eine geneigte Wand (27) umfasst, die ausgestaltet ist, mit den entsprechenden Mitteln zum Öffnen des Schutzdeckels (25) des Ladesteckers (2) gekoppelt zu werden, die aus einem Vorsprung (15) bestehen, der von einem Aufnahmebereich (14) des Ladesteckers (2) hervorsteht, wobei der Führungsschlitz (26) derart ausgestaltet ist, dass der Schutzdeckel (25) von der ersten Position (P1) zu der zweiten Position (P2) schwenkt, wenn der Vorsprung (15) mit dem Führungsschlitz (26) in Eingriff ist.

20. Ladeempfänger nach Anspruch 19, wobei eine zweite Kontaktwand (9) des zweiten elektrischen Verbinders (7) einen Verriegelungsbereich (26') umfasst, der mit dem Führungsschlitz (26) des Schutzdeckels (25) ausgerichtet ist, der ausgestaltet ist, mit dem Vorsprung (15) gekoppelt zu werden, der von dem Aufnahmebereich (14) des Ladesteckers (2) hervorsteht.

21. Ladeempfänger nach Anspruch 18, wobei die Mittel zum Öffnen des Schutzdeckels (25) einen ersten Vorsprung (33), der von einer ersten lateralen Wand (34) des Schutzdeckels (25) hervorsteht, und einen zweiten Vorsprung (35), der von einer zweiten lateralen Wand (36) des Schutzdeckels (25) hervorsteht, umfassen, wobei der erste Vorsprung (33) und der zweite Vorsprung (35) ausgestaltet sind, mit den entsprechenden Mitteln zum Öffnen des Schutzdeckels (25) des Ladesteckers (2) zusammenzuwirken, die aus einer ersten geneigten Führungsschiene (31) und einer zweiten geneigten Führungsschiene (32) bestehen, so dass der Schutzdeckel (25) von der ersten Position (P1) zu der zweiten Position (P2) schwenkt, wenn die erste geneigte Führungsschiene (31) an dem ersten Vorsprung (33) anliegt und darauf gleitet und die zweite geneigte Führungsschiene (32) an dem zweiten Vorsprung (35) anliegt und darauf gleitet.

22. Ladeempfänger nach einem der Ansprüche 18 bis 21, wobei der Schutzdeckel (25) mit dem zweiten elektrischen Verbinder (7) durch Rückholmittel verbunden ist, um das Rückholen des Schutzdeckels (25) von der zweiten Position (P2) zu der ersten Position (P1) zu ermöglichen, wenn der Vorsprung (15) von dem Führungsschlitz (26) gelöst ist oder wenn die ersten und zweiten geneigten Führungsschienen (31, 32) jeweils von den ersten und zweiten Vorsprüngen (33, 35) freigegeben sind.

23. Ladeempfänger nach einem der Ansprüche 18 bis 22, wobei der zweite weibliche elektrische Verbinder (7) eine Mehrzahl von Vertiefungen (28) umfasst, wobei jede Vertiefung (28) einen des zweiten elektrischen Kontakts (6) umfasst, wobei jede Vertiefung (28) eine erste Öffnung (29), die an der zweiten Kontaktwand (9) für den Eingriff des ersten elektrischen Kontakts (5) des ersten männlichen elektrischen Verbinders (4) angeordnet ist, und eine zweite Öffnung (30) umfasst.

24. Verfahren zum Verbinden eines Ladeempfängers (8) eines Elektrofahrzeugs (3) und eines Ladesteckers (2) einer Ladestation (1), wobei die Ladestation (1) am Boden (39) angeordnet ist und geeignet ist, unterhalb der Unterseite (3') des Elektrofahrzeugs (3) angeordnet zu sein, wobei die Ladestation (1), die nach einem der Ansprüche 14 - 17 ausgestaltet ist, den Ladestecker (2) umfasst, der nach einem der Ansprüche 1 bis 13 ausgestaltet ist, die einen ersten elektrischen Verbinder (4), mindestens einen Arm (20, 20'), der mit dem Ladestecker (2) durch Verbindungsmittel (21) verbunden ist, und mindestens einen Aktor (22) zum Bewegen des mindestens einen Arms (20, 20') umfasst, wobei der Ladeempfänger (8), der nach einem der Ansprüche 18 - 23 ausgestaltet ist, an der Unterseite (3') des Elektrofahrzeugs (3) angebracht ist und einen zweiten elektrischen Verbinder (7) umfasst, wobei der Ladestecker (2) Führungsmittel (10, 12) umfasst, umfassend einen Aufnahmebereich (14), der ausgestaltet ist, den Ladeempfänger (8) zumindest teilweise zu umgeben, und ausgestaltet ist, den ersten elektrischen Verbinder (4) und den zweiten elektrischen Verbinder (7) auszurichten, wenn der Ladestecker (2) in die Richtung des Ladeempfängers (8) oder umgekehrt bewegt wird, wobei das Verfahren die folgenden Schritte umfasst:
wenn der Ladestecker (2) an der Unterseite (3') des Elektrofahrzeugs (3) in einer Gleitposition (SP) anliegt:
A) Bewegen des Elektrofahrzeugs (3) in Translation entlang einer parallelen Richtung in Relation zu dem Ladestecker (2), um den Ladeempfänger (8) in die Richtung des Ladesteckers (2) zu bewegen, so dass der Ladestecker (2) an der Unterseite (3') des Elektrofahrzeugs (3) gleitet, oder
B) Bewegen des Arms (20, 20') mittels des Aktors (22) in Translation entlang der Unterseite (3') des Elektrofahrzeugs (3), um den Ladestecker (2) in die Richtung des Ladeempfängers (8) zu bewegen, so dass der Ladestecker (2) an der Unterseite (3') des Elektrofahrzeugs (3) gleitet,
bei Bewegen des Elektrofahrzeugs (3) oder des Arms (20, 20') gemäß dem Schritt A oder B:
C) Ausrichten des ersten elektrischen Verbinders (4) mit dem zweiten elektrischen Verbinder (7) mittels der Führungsmittel (10, 12) des Ladesteckers (2), dann
D) Schwenken des Schutzdeckels (25), der in Rotation von einer ersten Position (P1), in der der Schutzdeckel (25) den zweiten elektrischen Verbinder (7) zum Schützen des zweiten elektrischen Kontakts (6) bedeckt, zu einer zweiten Position (P2), in der der Schutzdeckel (25) den zweiten elektrischen Verbinder (7) freilegt, beweglich ist, mittels entsprechender Mittel (15, 33, 35, 26, 31, 32) zum Öffnen des Schutzdeckels (25) des Ladeempfängers (8) und des Ladesteckers (2), dann
E) mechanisches und elektrisches Verbinden des ersten elektrischen Verbinders (4) und des zweiten elektrischen Verbinders (7) .

25. Verfahren nach Anspruch 24, wobei, wenn der Ladestecker (2) und der Arm (20, 20') innerhalb eines einzelnen Schutzgehäuses in einer Schutzposition (PP) angeordnet sind, vor den Schritten A oder B bis E:
G) Bewegen des Arms (20, 20') mittels des Aktors (22) in Translation entlang einer vertikalen Richtung, um den Ladestecker (2) in die Richtung der Unterseite (3') des Elektrofahrzeugs (3) in die Gleitposition (SP) zu bewegen, oder
H) Bewegen des Arms (20, 20') mittels des Aktors (22) in Rotation, um den Ladestecker (2) in die Richtung der Unterseite (3') des Elektrofahrzeugs (3) in die Gleitposition (SP) zu bewegen.

26. Verfahren nach Anspruch 24, wobei, wenn der Ladestecker (2) innerhalb eines ersten Schutzgehäuses (23) in einer Schutzposition (PP) angeordnet ist und der Arm (20, 20') und der Aktor (22) innerhalb eines zweiten Schutzgehäuses (24) angeordnet sind, vor den Schritten A oder B bis E:
I) Bewegen des Arms (20, 20') mittels des Aktors (22) in Translation entlang einer horizontalen Richtung, um den Ladestecker (2) aus dem ersten Schutzgehäuse (23) heraus zu bewegen,
K) Bewegen des Arms (20, 20') mittels des Aktors (22) in Translation entlang einer vertikalen Richtung, um den Ladestecker (2) in die Richtung der Unterseite (3') des Elektrofahrzeugs (3) in die Gleitposition (SP) zu bewegen, oder
L) Bewegen des Arms (20, 20') mittels des Aktors (22) in Rotation, um den Ladestecker (2) in die Richtung der Unterseite (3') des Elektrofahrzeugs (3) in die Gleitposition (SP) zu bewegen.

## Revendications

1. Fiche (2) de chargeur destinée à fournir de l'énergie électrique à un véhicule électrique (3), la fiche (2) de chargeur comportant au moins un premier connecteur électrique (4) comportant au moins un premier contact électrique (5), le premier connecteur électrique (4) étant disposé pour être couplé avec un second connecteur électrique (7) correspondant d'une prise (8) de charge située sur le soubassement (3') du véhicule électrique (3) de telle façon que le ou les premiers contacts électriques (5) soit relié électriquement à au moins un second contact électrique (6) du second connecteur électrique (7), un support (17) comportant des moyens (10, 12) de guidage comportant une zone (14) de réception disposée pour entourer au moins partiellement la prise (8) de charge et disposée pour aligner le premier connecteur électrique (4) et le second connecteur électrique (7), lors d'un déplacement de la fiche (2) de chargeur dans la direction de la prise (8) de charge ou inversement,
fiche (2) de chargeur **caractérisée en ce que** le support (17) comporte une face inférieure (17a) sur laquelle le premier connecteur électrique (4) est monté et une face supérieure (17b) disposée pour coulisser sur le soubassement (3') du véhicule électrique (3).

2. Fiche de chargeur selon la revendication 1, le moyen de guidage comportant un premier élément (10) dépassant du support (17) sur un premier côté latéral (11) du premier connecteur électrique (4) et un second élément (12) dépassant du support (17) sur un second côté latéral (13) du premier connecteur électrique (4) délimitant respectivement une première partie (14a) et une seconde partie (14b) de la zone (14) de réception, le premier élément (10) et le second élément (12) étant positionnés à une distance prédéterminée (D) l'un de l'autre et étant séparés l'un de l'autre par une partie (14c) de base de la zone (14) de réception.

3. Fiche de chargeur selon la revendication 2, la zone (14) de réception présentant une forme en U délimitée par la première partie (14a), la seconde partie (14b) et la partie (14c) de base.

4. Fiche de chargeur selon l'une des revendications 2 à 3, la fiche (2) de chargeur comportant des moyens (15 ; 31, 32) d'ouverture d'un couvercle (25) de protection de la prise (8) de charge, disposés pour coopérer avec des moyens (26 ; 33, 35) correspondants d'ouverture du couvercle (25) de protection de la prise (8) de charge.

5. Fiche de chargeur selon la revendication 4, les moyens d'ouverture du couvercle (25) de protection étant constitués d'une protubérance (15) dépassant de la zone (14) de réception du support (17), la protubérance (15) étant disposée pour coopérer avec les moyens correspondants d'ouverture du couvercle (25) de protection de la prise (8) de charge constitués d'une fente (26) de guidage du couvercle (25) de protection comportant une paroi inclinée (27).

6. Fiche de chargeur selon la revendication 4, les moyens d'ouverture du couvercle (25) de protection comportant un premier rail incliné (31) de guidage dépassant de la face inférieure (17a) du support (17) et entourant le premier côté latéral (11) du premier connecteur électrique (4), et un second rail incliné (32) de guidage dépassant de la face inférieure (17a) du support (17) et entourant le second côté latéral (13) du premier connecteur électrique (4), le premier rail incliné (31) de guidage et le second rail incliné (32) de guidage étant disposés pour coopérer respectivement avec les moyens correspondants d'ouverture du couvercle (25) de protection de la prise (8) de charge constitués d'une première protubérance (33) dépassant d'une première paroi latérale (34) du couvercle (25) de protection de la prise (8) de charge et d'une seconde protubérance (35) dépassant d'une seconde paroi latérale (36) du couvercle (25) de protection.

7. Fiche de chargeur selon les revendications 2 et 6 ou 3 et 6, le premier rail incliné (31) de guidage faisant saillie perpendiculairement à la face inférieure (17a) le long de la première partie (14a) de la zone (14) de réception et le second rail incliné (32) de guidage faisant saillie perpendiculairement à la face inférieure (17a) le long de la seconde partie (14b) de la zone (14) de réception.

8. Fiche de chargeur selon l'une des revendications 1 à 7, le support (17) présentant une forme plane comportant la face inférieure (17a) sur laquelle le premier connecteur électrique (4) est monté et la face supérieure (17b) disposée pour coulisser sur le soubassement (3') du véhicule électrique (3).

9. Fiche de chargeur selon l'une des revendications 1 à 8, le support (17) comportant au moins une roue (18, 19) de guidage.

10. Fiche de chargeur selon la revendication 9, une première roue (18) de guidage et une seconde roue (19) de guidage dépassant du support (17) à travers la face inférieure (17a) et la face supérieure (17b).

11. Fiche de chargeur selon l'une des revendications 1 à 10, la face supérieure (17b) du support (17) comportant une pluralité de rainures (37), chaque rainure (37) s'étendant sur une direction longitudinale du support (17) et aboutissant à la zone (14) de réception par une extrémité ouverte (38), chaque rainure (37) étant disposée pour recevoir une broche correspondante faisant saillie à partir du soubassement (3') du véhicule électrique (3).

12. Fiche de chargeur selon la revendication 11, l'extrémité ouverte (38) présentant une forme en entonnoir.

13. Fiche de chargeur selon l'une des revendications 1 à 12, la fiche (2) de chargeur comportant un disjoncteur relié électriquement au(x) premier(s) connecteur(s) électrique(s) (4).

14. Station de charge comportant au moins un bras (20, 20') relié à une fiche (2) de chargeur par un moyen (21) de raccordement, et comportant au moins un actionneur (22) servant à déplacer le ou les bras (20, 20'), **caractérisée en ce que** la station de charge comporte une fiche (2) de chargeur selon l'une des revendications 1 à 13.

15. Station de charge selon la revendication 14, l'actionneur ou les actionneurs (22) étant disposés pour déplacer le ou les bras (20, 20') en rotation et/ou en translation.

16. Station de charge selon l'une des revendications 14 à 15, la station (1) de charge comportant un premier boîtier (23) de protection disposé pour protéger la fiche (2) de chargeur et un second boîtier (24) de protection disposé pour protéger l'actionneur (22), le premier boîtier (23) de protection et le second boîtier (24) de protection étant alignés et étant séparés l'un de l'autre par une distance D1.

17. Station de charge selon l'une des revendications 14 à 15, la station (1) de charge comportant un boîtier unique de protection disposé pour protéger la fiche (2) de chargeur, le bras (20, 20') et l'actionneur (22).

18. Prise (8) de charge destinée à un véhicule électrique (3), apte à être montée sur le soubassement (3') du véhicule électrique (3) et disposée pour être couplée avec la fiche (2) de chargeur selon l'une des revendications 1 à 13, la prise (8) de charge comportant au moins un second connecteur électrique (7) disposé pour être couplé avec le premier connecteur électrique (4) de la fiche (2) de chargeur, le second connecteur électrique (7) comportant au moins un second contact électrique (6) disposé pour être électriquement couplé avec au moins un premier contact électrique (5) du premier connecteur électrique (4) de la fiche (2) de chargeur, la prise (8) de charge comportant un couvercle (25) de protection pivotant mobile en rotation d'une première position (P1), où le couvercle (25) de protection recouvre le second connecteur électrique (7) pour protéger le second contact électrique (6), à une seconde position (P2), où le couvercle (25) de protection découvre le second connecteur électrique (7) pour permettre le raccordement électrique entre le second contact électrique (6) et le premier contact électrique (5), prise (8) de charge **caractérisée en ce que** le couvercle (25) de protection comporte des moyens (26 ; 33, 35) d'ouverture du couvercle (25) de protection disposés de telle façon que le couvercle (25) de protection bascule de la première position (P1) à la seconde position (P2) lorsqu'il coopère avec des moyens (15 ; 31, 32) correspondants d'ouverture du couvercle (25) de protection de la fiche (2) de chargeur.

19. Prise de charge selon la revendication 18, les moyens d'ouverture du couvercle (25) de protection étant constitués d'une fente (26) de guidage du couvercle (25) de protection comportant une paroi inclinée (27), disposés pour être couplés avec les moyens correspondants d'ouverture du couvercle (25) de protection de la fiche (2) de chargeur constitués d'une protubérance (15) dépassant d'une zone (14) de réception de la fiche (2) de chargeur, la fente (26) de guidage étant disposée de telle façon que le couvercle (25) de protection bascule de la première position (P1) à la seconde position (P2) lorsque la protubérance (15) interagit avec la fente (26) de guidage.

20. Prise de charge selon la revendication 19, une seconde paroi (9) de contact du second connecteur électrique (7) comportant une zone (26') d'imbrication alignée avec la fente (26) de guidage du couvercle (25) de protection, disposée pour être couplée avec la protubérance (15) dépassant de la zone (14) de réception de la fiche (2) de chargeur.

21. Prise de charge selon la revendication 18, les moyens d'ouverture du couvercle (25) de protection comportant une première protubérance (33) dépassant d'une première paroi latérale (34) du couvercle (25) de protection et une seconde protubérance (35) dépassant d'une seconde paroi latérale (36) du couvercle (25) de protection, la première protubérance (33) et la seconde protubérance (35) étant disposées pour coopérer avec les moyens correspondants d'ouverture du couvercle (25) de protection de la fiche (2) de chargeur constitués d'un premier rail incliné (31) de guidage et d'un second rail incliné (32) de guidage de telle sorte que le couvercle (25) de protection bascule de la première position (P1) à la seconde position (P2) lorsque le premier rail incliné (31) de guidage s'appuie contre et glisse sur la première protubérance (33) et le second rail incliné (32) de guidage s'appuie contre et glisse sur la seconde protubérance (35).

22. Prise de charge selon l'une des revendications 18 à 21, le couvercle (25) de protection étant lié au second connecteur électrique (7) par un moyen de rappel pour permettre le rappel du couvercle (25) de protection de la seconde position (P2) à la première position (P1) lorsque la protubérance (15) est dégagée de la fente (26) de guidage ou lorsque les premier et second rails inclinés (31, 32) de guidage sont respectivement libérés des première et seconde protubérances (33, 35).

23. Prise de charge selon l'une des revendications 18 à 22, le second connecteur électrique femelle (7) comportant une pluralité de renfoncements (28), chaque renfoncement (28) comportant un des seconds contacts électriques (6), chaque renfoncement (28) comportant une première ouverture (29) située sur la seconde paroi (9) de contact servant à l'interaction du premier contact électrique (5) du premier connecteur électrique mâle (4) et d'une seconde ouverture (30).

24. Procédé de raccordement d'une prise (8) de charge d'un véhicule électrique (3) et d'une fiche (2) de chargeur d'une station de charge (1), la station (1) de charge étant située sur le sol (39) et étant apte à être situé sous le soubassement (3') du véhicule électrique (3), la station (1) de charge, disposée selon l'une des revendications 14 à 17, comportant la fiche (2) de chargeur, disposée selon l'une des revendications 1 à 13, qui comporte un premier connecteur électrique (4), au moins un bras (20, 20') relié à la fiche (2) de chargeur par un moyen (21) de raccordement et au moins un actionneur (22) servant à déplacer le ou les bras (20, 20'), la prise (8) de charge, disposée selon l'une des revendications 18 à 23, étant montée sur le soubassement (3') du véhicule électrique (3) et comportant un second connecteur électrique (7), la fiche (2) de chargeur comportant des moyens (10, 12) de guidage comportant une zone (14) de réception disposée pour entourer au moins partiellement la prise (8) de charge et disposée pour aligner le premier connecteur électrique (4) et le second connecteur électrique (7), lors d'un déplacement de la fiche (2) de chargeur dans la direction de la prise (8) de charge ou inversement, le procédé comportant les étapes consistant :
lorsque la fiche (2) de chargeur s'appuie contre le soubassement (3') du véhicule électrique (3) dans une position de glissement (SP), à :
A) déplacer le véhicule électrique (3) en translation suivant une direction parallèle par rapport à la fiche (2) de chargeur, pour déplacer la prise (8) de charge dans la direction de la fiche (2) de chargeur de telle façon que la fiche (2) de chargeur glisse sur le soubassement (3') du véhicule électrique (3), ou
B) déplacer le bras (20, 20') au moyen de l'actionneur (22) en translation le long du soubassement (3') du véhicule électrique (3) pour déplacer la fiche (2) de chargeur dans la direction de la prise (8) de charge de telle façon que la fiche (2) de chargeur glisse sur le soubassement (3') du véhicule électrique (3),
lors d'un déplacement du véhicule électrique (3) ou du bras (20, 20') selon l'étape A ou B, à :
C) aligner le premier connecteur électrique (4) avec le second connecteur électrique (7) à l'aide des moyens (10, 12) de guidage de la fiche (2) de chargeur, puis
D) faire basculer le couvercle (25) de protection mobile en rotation d'une première position (P1) où le couvercle (25) de protection recouvre le second connecteur électrique (7) pour protéger le second contact électrique (6) à une seconde position (P2) où le couvercle (25) de protection découvre le second connecteur électrique (7) à l'aide de moyens correspondants (15, 33, 35, 26, 31, 32) d'ouverture du couvercle (25) de protection de la prise (8) de charge et de la fiche (2) de chargeur, puis
E) raccorder mécaniquement et électriquement le premier connecteur électrique (4) et le second connecteur électrique (7) .

25. Procédé selon la revendication 24, comportant, lorsque la fiche (2) de chargeur et le bras (20, 20') sont situés à l'intérieur d'un boîtier unique de protection dans une position de protection (PP), avant les étapes A ou B à E, les actions de :
G) déplacer le bras (20, 20') au moyen de l'actionneur (22) en translation suivant une direction verticale pour déplacer la fiche (2) de chargeur en direction du soubassement (3') du véhicule électrique (3) dans la position de glissement (SP), ou
H) déplacer le bras (20, 20') au moyen de l'actionneur (22) en rotation pour déplacer la fiche (2) de chargeur en direction du soubassement (3') du véhicule électrique (3) dans la position de glissement (SP).

26. Procédé selon la revendication 24, comportant, lorsque la fiche (2) de chargeur est situé à l'intérieur d'un premier boîtier (23) de protection dans une position de protection (PP), et que le bras (20, 20') et l'actionneur (22) sont situés à l'intérieur d'un second boîtier (24) de protection, avant les étapes A ou B à E, les actions de :
I) déplacer le bras (20, 20') au moyen de l'actionneur (22) en translation suivant une direction horizontale pour sortir la fiche (2) de chargeur du premier boîtier (23) de protection,
K) déplacer le bras (20, 20') au moyen de l'actionneur (22) en translation suivant une direction verticale pour déplacer la fiche (2) de chargeur en direction du soubassement (3') du véhicule électrique (3) dans la position de glissement (SP), ou
L) déplacer le bras (20, 20') au moyen de l'actionneur (22) en rotation pour déplacer la fiche (2) de chargeur en direction du soubassement (3') du véhicule électrique (3) dans la position de glissement (SP).
